# EUROPEAN PATENT APPLICATION

(11) **EP 4 233 522 A1**
(43) Date of publication of application: **30.08.2023**
(21) Application number: 23158544.9
(22) Date of filing: 24.02.2023
(51) Int. Cl.: A01D 34/78, A01D 69/02, H02J 9/06

(54) **METHOD OF MANAGING A TOOL OR VEHICLE WITH CONNECTION AND DISCONNECTION OF ON-BOARD BATTERIES, CONTROL UNIT CONFIGURED IN ACCORDANCE WITH SUCH METHOD AND LAWNMOWER TRACTOR COMPRISING SUCH CONTROL UNIT**

(30) Priority: 25.02.2022 IT 202200003653
(71) Applicant: Stiga S.p.A. in breve anche St. S.p.A., 31033 Castelfranco Veneto (TV) (IT)
(72) Inventor: BENETTI, Enrico, 31033 CASTELFRANCO VENETO (TV) (IT); BONOLLO, Federico, 36042 Breganze (VI) (IT)
(74) Representative: PGA S.p.A.

(57) **Abstract**

The present invention relates to a management method of a tool or vehicle (100), comprising at least one power user (101, 102) and a power supply circuit configured to electrically power the power user (101, 102). At least one among a first battery (B1) and a second battery (B2) is configured to be removably installed on board the tool or vehicle (100) and contributes to electrically powering the power user (101, 102) by means of the power supply circuit. The management method comprises a step of configuring a control unit (10), wherein the configuration step allows the connection or disconnection of at least one among the first battery (B1) and the second battery (B2) from the power supply circuit, without interrupting the electrical power provided to the power user (101, 102). The present invention further relates to a control unit (10) configured to be operatively connected with the power user (101, 102) and to allow the connection or disconnection of at least one among the first battery (B1) and the second battery (B2) of said plurality of batteries (B1-B4) without interruption of an electrical power supply provided to said at least one power user (101, 102). Finally, the present invention relates to a lawnmower tractor comprising the control unit (10).

## Description

### Technical field

The present disclosure relates to the field of electronics, in particular applied to tools and/or vehicles and still more in particular applied to tools and/or vehicles for gardening or agriculture.

In detail, the present disclosure relates to a management method for charging and discharging a plurality of batteries.

The present disclosure further relates to a control unit configured for managing charging and discharging a plurality of batteries.

### Background art

In the past, tools were substantially manually operated. This applies in particular to tools for gardening and agriculture. Over time, tools became widespread, particularly for gardening or agriculture, which were provided with endothermic engines. Such tools made it possible to execute operations on a larger scale or with less effort for the operator.

Vehicles for gardening and agriculture, such as for example lawnmower tractors, were also provided with an endothermic engine.

Early attempts to provide certain tools or vehicles for agriculture or gardening with batteries have been observed over the years. In the early days, the poor of effectiveness of such tools or vehicles was observed, mainly due to the reduced charging capacity possessed by the batteries of the past. In fact, before the advent of batteries with Ni-Mh or Lithium technology, lead-acid or zinc-carbon batteries were used, whose efficiency was poor and/or whose size was very large.

Consequently, such tools or vehicles often discharged early, and a large amount of batteries had to be replaced. However, in the past years, the batteries were often not rechargeable or easily and quickly lost the ability to be recharged to the original (or nominal) charge value. Therefore, with the passage of time, the overall efficiency given by the use of batteries degraded little by little until reaching a level where the use of such tools or vehicles became almost inconvenient with respect to the use of alternatives to endothermic engines or manual operation. In fact, the life of the batteries and their charging capacity were both too limited for battery power to be a practical alternative to propulsion with endothermic engines.

The diffusion of tools and/or vehicles for gardening or agriculture first occurred on products intended for what is known as the consumer market.

Subsequently, especially in recent times and by virtue of the considerable capacity in relation to the size offered by Lithium batteries, tools or vehicles for gardening or agriculture for the professional sector which use batteries have become widespread.

Lithium batteries are typically charged with CCCV-type chargers. CCCV chargers are chargers which charge with constant current and constant voltage. With a CCCV-type charger, initially the batteries are charged with constant current; when the battery is almost completely charged, its voltage reaches a voltage threshold value, at which point the charging current decreases, for example with an exponential value, reaching the full charge value.

The Applicant has observed that often the manufacturers which produce tools and/or vehicles for gardening or agriculture have different types of tools and vehicles in their catalogue, and for the same type, they have different versions of the same tool or vehicle in their catalogue characterized by increasing powers and/or sizes.

The batteries are often not directly produced by the manufacturers which produce tools or vehicles for gardening or agriculture; in fact, such batteries are typically purchased from third parties.

The use of different batteries for different applications is in principle inconvenient. Although it is unthinkable, especially where the manufacturer has tools and/or vehicles for gardening or agriculture in its catalogue characterized by significantly different powers, to have a single type of battery, in principle it would be preferably for the manufacturer to have a number of different batteries kept as small as possible, and to have the possibility to adapt the number of batteries to be used in accordance with the specific type or version of tool and/or vehicle.

The batteries are recharged with chargers which are often dedicated to a certain type of application. The chargers work by supplying a certain direct current, which is a function of the type and/or the capacity (Ah) of the battery to be charged. Although very powerful chargers, in terms of the current which can be supplied, can be able to charge even small capacity batteries, it is true that high capacity batteries can not be recharged by low power chargers. In principle, and in accordance with what happens occurs for batteries, it would be preferable for the manufacturer to have the least number of different types of chargers.

### Objects

An object of the present invention is to describe a method and a device which allow to solve the drawbacks described above and which in particular allow to optimize the battery management process for tools and/or vehicles, in particular for gardening or agriculture, for example for lawnmower tractors.

In particular, it is an object of the present invention to describe a method and a device which allow to optimize the battery charging and discharging process.

It is further an object of the present invention to describe a method and a device which allow to reduce, as far as possible, the number of different types of batteries to be produced for a certain variety of tools and/or vehicles, in particular for gardening or agriculture.

It is further an object of the present invention to describe a method and a device which allow to reduce, as far as possible, the number of different types of chargers to be produced for a certain variety of tools and/or vehicles, in particular for gardening or agriculture.

It is further an object of the present invention to describe a method and a device which allow a safe activation and use of the tool or vehicle on which the aforesaid batteries are installed.

It is further an object of the present invention to describe a method and a device which allow to keep the power needed for charging the batteries limited, and which allow to reduce, as far as possible, the electronic intelligence needed on board the battery charger.

It is further an object of the present invention to describe a method and a device which allow, with respect to the solutions known in the state of the art, advantages in terms of useful life of the batteries.

It is further an object of the present invention to describe a method and a device which allow an increase in the thermal efficiency of the batteries, limiting the possible energy dissipations.

It is further an object of the present invention to describe a method and a device which allow the implementation of diagnostic functions about the state of the batteries, it being possible to execute a continuous monitoring of voltage and current during the charging and discharging steps.

It is further an object of the present invention to provide a vehicle for gardening having an arrangement of the batteries which is optimal both for the purpose of allowing convenient and ergonomic operations of battery insertion and/or extraction and/or replacement, and for the purpose of obtaining a notable stability of the vehicle.

These and other objects will be described in more detail with reference to the following summary.

### Summary

The salient features of the present disclosure are described herein in some aspects. Such aspects can be combined with each other, with portions of the detailed description and/or with one or more of the claims.

### Method

In accordance with the present disclosure, a management method is disclosed for charging and discharging a plurality of batteries (B1-B4) housed in a tool or vehicle (100), in particular in a tool or vehicle for gardening or agriculture, still further in particular in a lawnmower tractor, the method comprising:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging step;
- a power supply step, at least one power user (101, 102) of said tool or vehicle (100) being supplied in said supply step by means of a transfer of electrical energy to said at least one power user (101, 102) simultaneously occurring from said first part (B1) of said plurality of batteries (B1-B4) and from said further part (B2, B3, B4) of said plurality of batteries (B1-B4).

According to a further non-limiting aspect, said at least one power user (101, 102) of said tool or vehicle (100) is supplied in said supply step by a transfer of electrical energy to said at least one power user (101, 102) simultaneously occurring from each battery of said plurality of batteries (B1-B4).

According to a further non-limiting aspect, the selection step of said first part (B1) or said further part (B2, B3, B4) of the plurality of batteries (B1-B4) comprises the transmission, from a control unit (10) and by means of at least one charge enabling control line (14) operatively connected with a control input of said plurality of batteries (B1-B4), a control signal intended to select said first part (B1) of said plurality of batteries (B1-B4) or said further part (B2, B3, B4) of said plurality of batteries (B1-B4) to cause a switching of a supply controller or switch (44) of the first part (B1) or of the further part (B2, B3, B4) of said plurality of batteries (B1-B4) so that a flow of electrical energy from a power supply (30) can determine the charging thereof.

According to a further non-limiting aspect, the selection step includes the transmission, on said at least one control line (14) of a numerical signal, in particular binary, optionally in which the "0s" and "1s" are transmitted with pulses of different time extension.

According to a further non-limiting aspect, the pulses are negative voltage pulses, in which at the "0s" or "1s", a voltage normally assuming a first and higher value is temporarily brought, for the time extension of the "0s" and "1s", to a second and lower value.

According to a further non-limiting aspect, the control line (14) is of the 1-wire type.

According to a further non-limiting aspect, the selection step of said first part (B1) or said further part (B2, B3, B4) of the plurality of batteries (B1-B4) comprises the transmission, from the control unit (10) and through a control line of a plurality of charge enabling control lines (14) each operatively connected with a control input of a respective battery of said plurality of batteries (B1-B4), a control signal intended to select a specific battery of said plurality of batteries (B1-B4) to cause a switching of a supply controller or switch (44) of said specific battery, so that a flow of electrical energy from a power supply (30) can determine the charging thereof.

According to a further non-limiting aspect, the method comprises:
- at least one further selection step, in which the control unit (10) selects a subsequent part (B2, B3, B4) of said plurality of batteries (B1-B4), and
- a charging step, in which the power supply (30) selectively charges said subsequent part (B2, B3, B4) of said previously selected plurality of batteries (B1-B4).

According to a further non-limiting aspect, the first part (B1) of said plurality of batteries (B1-B4) comprises a single first battery.

According to a further non-limiting aspect, the subsequent part of said plurality of batteries (B1-B4) comprises at least a single second battery which is different with respect to said first battery.

According to a further non-limiting aspect, the selection step of the subsequent part (B2, B3, B4) of the plurality of batteries (B1-B4) being alternative to the selection step of the first part (B1) of the plurality of batteries (B1-B4) and determining an isolation of said subsequent part (B2, B3, B4) of the plurality of batteries (B1-B4) from the first part (B1) of said plurality of batteries (B1-B4).

According to a further non-limiting aspect, the selection step of said first part (B1) or said subsequent part (B2, B3, B4) of the plurality of batteries (B1-B4) comprises the transmission, from the control unit (10) and by means of at least one charge enabling control line (14) operatively connected with a control input of said plurality of batteries (B1-B4), a control signal intended to select said first part (B1) of said plurality of batteries (B1-B4) or said subsequent part (B2, B3, B4) of said plurality of batteries (B1-B4) to cause a switching of a supply controller or switch (44) of the first part (B1) or of the subsequent part (B2, B3, B4) of said plurality of batteries (B1-B4) so that a flow of electrical energy from said power supply (30) can determine the charging thereof.

According to a further non-limiting aspect, the method comprises a step of detecting the charge of said first part (B1) of said plurality of batteries (B1-B4) by means of at least one charge sensor, in particular a voltage sensor.

According to a further non-limiting aspect, the method comprises an interruption of the charging of the first part (B1) of said plurality of batteries (B1-B4) when said charging sensor detects a higher charge, in particular a voltage and/or a current, with respect to a predetermined threshold value.

According to a further non-limiting aspect, the selection step, the charging step, the supply step of the at least one power user (101, 102) of said tool or vehicle (100), and optionally at least one of the further selection step, the charge detection step, or the interruption of the charge are managed through a control unit (10).

According to a further non-limiting aspect, the power supply (30) is configured to be removably connectable to said plurality of batteries (B1-B4) through said control unit (10), in particular through a connector (16).

According to a further non-limiting aspect, said charge sensor comprises, or is, a voltage sensor or a current sensor.

According to a further non-limiting aspect, the interruption of the charge automatically determines the selection step of the subsequent part (B2, B3, B4) of said plurality of batteries (B1-B4) and a de-selection step of said first part (B1) of said plurality of batteries (B1-B4).

According to a further non-limiting aspect, the selection step comprises an electronic selection of said at least a first part (B1) of said plurality of batteries (B1-B4) and, optionally of the at least one subsequent part (B2, B3, B4) of said plurality of batteries (B1-B4).

According to a further non-limiting aspect, said selection comprises a transmission of a selection command on at least one control line (14) connected with at least one of said first part (B1) and said subsequent part (B2, B3, B4) of the plurality of batteries (B1-B4); said control line (14) ending on a control input (15) of at least one of said first part (B1) and said subsequent part (B2, B3, B4) of the plurality of batteries (B1-B4), optionally comprising a transmission of a selection command on a control line (14) uniquely associated with a battery of the plurality of batteries (B1-B4) to be charged.

According to a further non-limiting aspect, the method comprises an electronic malfunction detection step and/or a verification step of an improper operating condition, optionally performed automatically, on each battery of the plurality of batteries (B1-B4).

According to a further non-limiting aspect, the method comprises an exclusion step at least one battery selected among the batteries of the plurality of batteries (B1-B4) when for said at least one battery of the plurality of batteries said malfunction and/or said improper operating condition is detected; the exclusion step determining the exclusion of said selected battery from the supply step.

According to a further non-limiting aspect, said malfunction comprises at least one of a lower operating voltage with respect to a first lower threshold or higher with respect to a second upper threshold, a lower operating temperature with respect to a first lower threshold or higher with respect to a second upper threshold.

According to a further non-limiting aspect, the plurality of batteries (B1-B4) is configured to be removed or inserted "hot," and/or the method comprises enabling a removal or insertion of at least one battery of said plurality of batteries (B1-B4) "hot" and/or during at least the supply and/or charging, without causing a power supply interruption of said at least one power user (101, 102) and/or without causing a charging interruption of the remaining batteries of the plurality of batteries (B1-B4).

According to a further non-limiting aspect, the method comprises a step of detecting a temperature (t) of at least one part of said plurality of batteries (B1-B4) by means of at least one temperature sensor, in particular by means of at least one temperature sensor operatively associated with said plurality of batteries (B1-B4), and preferably by means of a plurality of temperature sensors each operatively associated with a respective battery (B1-B4).

According to a further non-limiting aspect, the method comprises:
- an electronic comparison step of a signal indicative of the temperature (t) assumed by at least one battery of said plurality of batteries (B1-B4) with a temperature threshold value (t_{TH}), and
- an activation step of at least one fan for cooling said at least one battery of said plurality of batteries (B1-B4) when the signal indicates a temperature (t) higher than said temperature threshold (t_{TH});
the method optionally comprising:
- an electronic comparison step of a plurality of signals indicative of the temperature (t) assumed by each battery of said plurality of batteries (B1-B4) with a temperature threshold value (t_{TH}), and
- an activation step of at least one fan for cooling each of the batteries of the plurality of batteries (B1-B4) whose relative signal indicates a temperature (t) higher than said temperature threshold (t_{TH}).

According to a further non-limiting aspect, the method comprises a control of a number n of batteries (B1-B4) operatively connected with the control unit (10), and comprises an enabling an actuation of at least one priority power user (102) among the plurality of power users (101, 102), or of a priority power user (102) and of a secondary power user (101) among the plurality of power users (101, 102), as a function of said number n of batteries (B1-B4).

In accordance with the present disclosure, a management method is disclosed for charging and discharging a plurality of batteries (B1-B4) housed in a tool or vehicle (100), in particular a tool or vehicle for gardening or agriculture, the method comprising:
- a selection step, in which a control unit (10) operatively interposed between the plurality of batteries (B1-B4) and a plurality of power users (101, 102) of the tool or vehicle (100) selects at least a first part (B1) of said plurality of batteries (B1-B4), enabling a charge thereof;
- a power supply step of the at least one power user (101, 102) of said tool or vehicle (100), said supply step comprising a transfer of electrical energy simultaneously occurring from at least part of said plurality of batteries (B1-B4) to said at least one power user (101, 102);
the method comprising a control of a number n of batteries (B1-B4) operatively connected to the control unit (10), and comprising enabling an actuation of at least one priority power user (102) among the plurality of power users (101, 102), or of a priority power user (102) and a secondary power user (101) among the plurality of power users (101, 102), as a function of said number n of batteries (B1-B4).

According to a further non-limiting aspect, the priority power user (102) comprises at least one motor, in particular an electric motor, preferably configured and specifically intended to cause a movement of said tool or vehicle (100) and/or an electronic control unit intended to control, in particular to determine at least one of a power supply, a powering down, and a power delivery, of said at least one motor.

According to a further non-limiting aspect, the secondary power user (101) comprises at least one motor or servo-actuator installed on said tool or vehicle (100), configured and specifically intended to determine the execution of an operating activity of said tool or vehicle (100).

According to a further non-limiting aspect, the method comprises:
- a charging step, in which a power supply (30) selectively charges said first part (B1) of said previously selected plurality of batteries (B1-B4).

According to a further non-limiting aspect, the enabling of the actuation is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and is greater than the number k of batteries sufficient to allow enabling the actuation of the secondary power user (101), the actuation of the priority power user (102) and the secondary power user (101) is authorized.

According to a further non-limiting aspect, the method comprises an electronic survey step of a voltage value of said at least one part (B1) of the plurality of batteries (B1-B4), in particular during the charging step of the batteries; the method comprising an interruption of charging said at least a first part (B1) of the plurality of batteries (B1-B4) when a voltage value of said at least a first part (B1) of the plurality of batteries (B1-B4) reaches a maximum voltage threshold value (Vmax) and/or comprising an electronic disabling of said at least a first part (B1) of the plurality of batteries (B1-B4), such that said at least a first part (B1) of the plurality of batteries (B1-B4) is excluded from the power supply of the at least one power user (101, 102) when the voltage of said at least a first part (B1) of the plurality of batteries (B1-B4) is below a minimum threshold value (Vmin).

According to a further non-limiting aspect, the method comprises a step of electronically detecting a value of a charging current supplied to said at least one part (B1) of the plurality of batteries (B1-B4) during the charging step of the batteries; the method comprising an interruption of charging said at least a first part (B1) of the plurality of batteries (B1-B4) when the current value exceeds a given maximum safety value (Imax) and/or falls below a minimum charging current value (Imin).

According to a further non-limiting aspect, said maximum safety value (Imax) is greater than said minimum charging current value (Imin).

According to a further non-limiting aspect, the method comprises:
- an immediate interruption of the charging step when the charging current value is above said maximum safety value (Imax); or
- an interruption of the charging step when the charging current value remains below said minimum charging current value (Imin) for a time equal to or greater than a determined waiting time (Tw).

According to a further non-limiting aspect, the step of verifying an improper operating condition comprises a step of verifying a voltage imbalance (Δ*V*(*Bₙ, B*_{*n*+*i*})) and/or a charge level imbalance (Δ*SoC*(*Bₙ, B*_{*n*+*i*})) between at least a first battery (Bn) and a second battery (Bn+i) of said plurality of batteries (B1-B4), the step of verifying said voltage imbalance (Δ*V*(*Bₙ, B*_{*n*+*i*})) and/or said charge level imbalance (Δ*SoC*(*Bₙ, B*_{*n*+*i*})) comprising:
- a comparison, in particular an electronic comparison, between a charge level difference (Δ*SoC*(*Bₙ, B*_{*n*+*i*})) between said at least a first battery (Bn) and a second battery (Bn+i) and a first reference value (Vv1), and/or
- a comparison, in particular an electronic comparison, between a voltage imbalance (Δ*V*(*Bₙ, B*_{*n*+*i*})) between said at least a first battery (Bn) and a second battery (Bn+i) and a second reference value (Vv2).

According to a further non-limiting aspect, if it is found that the charge level imbalance Δ*SoC*(*Bₙ, B*_{*n*+*i*}) between said at least a first battery (Bn) and a second battery (Bn+i) is greater than said first reference value (Vv1), the method comprises disabling said at least one power user (101, 102).

According to a further non-limiting aspect, the method comprises a step of selecting and/or limiting a maximum electrical power deliverable by each battery of the plurality of batteries (B1-B4), said selecting and/or limiting being an electronic selection and/or limitation, respectively.

According to a further non-limiting aspect, the step of selecting and/or limiting the maximum power comprises a transmission, in particular performed selectively and/or independently for each battery of the plurality of batteries (B1-B4), of a power management signal to a switch, in particular a bidirectional power switch, of at least one battery selected among the batteries of said plurality of batteries.

According to a further non-limiting aspect, in the charging step the control unit (10) is configured to charge at least a first part of the plurality of batteries (B1-B4) with a predefined charging current, optionally constant, until a predetermined threshold voltage value is reached; the control unit (10) being configured to execute a step of completing a charging of said at least a first part of the plurality of batteries (B1-B4), occurring when the voltage of said at least a first part of the plurality of batteries (B1-B4) exceeds said predetermined threshold voltage value, in which a charging current of said at least a first part of the plurality of batteries (B1-B4) is progressively reduced, optionally to a substantially zero value.

In accordance with the present disclosure, a management method is further disclosed for charging and discharging a plurality of batteries (B1-B4) housed in a tool or vehicle (100), in particular a tool or vehicle for gardening or agriculture, the method comprising:
- a power supply step of the at least one power user (101, 102) of said tool or vehicle (100), said supply step comprising a transfer of electrical energy simultaneously occurring from at least part of said plurality of batteries (B1-B4) to said at least one power user (101, 102),
- a step of selecting and/or limiting a maximum electrical power deliverable by each battery of the plurality of batteries (B1-B4), said selecting and/or limiting being an electronic selection and/or limitation, respectively.

According to a further non-limiting aspect, the method comprises:
- a selection step, in which a control unit (10) operatively interposed between the plurality of batteries (B1-B4) and at least one power user (101, 102) of the tool or vehicle (100) selects a first part (B1) of said plurality of batteries (B1-B4), enabling a charge thereof;
- a charging step, in which a power supply (30) selectively charges said first part (B1) of said previously selected plurality of batteries (B1-B4).

According to a further non-limiting aspect, the method comprises a connection step of the plurality of batteries (B1-B4), optionally by means of the control unit (10), with a management system (20) forming part of said tool or vehicle (100), the connection step being a removable connection step occurring by means of a connector (16).

According to a further non-limiting aspect, said management system (20) is operatively interposed between said control unit (10) and said at least one power user (101, 102).

According to a further non-limiting aspect, the management system (20) comprises, or is connected to, a power supply circuit of said tool or vehicle (100).

According to a further non-limiting aspect, the method includes interrupting or allowing said power supply step by means of at least one power switch (20', 20s), controllable by means of a control signal determining, in use, a switching between a closed configuration and an open configuration of said power switch; said at least one internal power switch (20', 20s) being configured and intended to determine the power supply or interruption of said at least one power user (101, 102).

According to a further non-limiting aspect, the method includes interrupting or allowing said power supply step by means of a power switch (20s) of a control system (20) of the tool or vehicle (100), operatively interposed between said plurality of batteries (B1-B4) and said at least one power user (101, 102).

According to a further non-limiting aspect, the method includes interrupting or allowing said power supply step by means of a power switch (20') inside said control unit (10), the power switch (20') being operatively interposed between said plurality of batteries (B1-B4) and said at least one power user (101, 102), the power switch (20') being controllable by means of a control signal determining, in use, a switching between a closed configuration and an open configuration adapted to determine an interruption or a supply of said at least one power user (101, 102).

According to a further non-limiting aspect, the power switch (20s) of the control system (20) and the supply switch (20') of the control unit (10) are connected in series.

According to a further non-limiting aspect, the method comprises a transmission of said control signal by means of, or from, a circuit or contact key (42) of said tool or vehicle (100).

### Control unit

In accordance with the present disclosure, a control unit (10) for managing the charging and discharging of a plurality of batteries (B1-B4) housed in a tool or vehicle (100) is also described, in particular in a tool or vehicle for gardening or agriculture, even more in particular in a lawnmower tractor, in which the control unit (10) is configured to be in use operatively interposed between the plurality of batteries (B1-B4) and at least one power user (101, 102) of the tool or vehicle (100) and comprising:
- a charging operating configuration, wherein said control unit (10):
   - selects a first part (B1) of said plurality of batteries (B1-B4),
   - causes a selective charging, by a power supply (30) of said first part (B1) of said plurality of batteries (B1-B4),
   - selects a further part (B2, B3, B4) of said plurality of batteries (B1-B4) and
   - causes a selective charging, by a power supply (30) of said further part (B2, B3, B4) of said plurality of batteries (B1-B4);
- a power supply operating configuration, wherein the control unit (10) causes a power supply of the at least one power user (101, 102) of said tool or vehicle (100), determining, in use, a transfer of electrical energy to said at least one power user (101, 102) simultaneously occurring from said first part (B1) of said plurality of batteries (B1-B4) and from said further part (B2, B3, B4) of said plurality of batteries (B1-B4),
optionally wherein the control unit (10) causes a power supply of the at least one power user (101, 102) of said tool or vehicle (100), determining, in use, a transfer of electrical energy to said at least one power user (101, 102) simultaneously occurring from each battery of said plurality of batteries (B1-B4).

According to a further non-limiting aspect, in the charging operating configuration, the control unit (10):
- selects a subsequent part (B2, B3, B4) of said plurality of batteries (B1-B4), and
- causes a selective charging, by a power supply (30) of said subsequent part (B2, B3, B4) of said previously selected plurality of batteries (B1-B4).

According to a further non-limiting aspect, the selection of the subsequent part (B2, B3, B4) of the plurality of batteries (B1-B4) is alternative to the selection of the first part (B1) of the plurality of batteries (B1-B4) and determining an isolation of said subsequent part (B2, B3, B4) of the plurality of batteries (B1-B4) from the first part (B1) of said plurality of batteries (B1-B4).

According to a further non-limiting aspect, the control unit (10) comprises at least one charge enabling control line (14), operatively connected with a control input of said plurality of batteries (B1-B4); said control unit (10) being configured to select said first part (B1) of said plurality of batteries (B1-B4) or to select said subsequent part (B2, B3, B4) of said plurality of batteries (B1-B4) transmitting, in use, a control signal on said at least one control line (14).

According to a further non-limiting aspect, said control signal is intended to cause a switch of a supply controller or switch (44) of the first part (B1) or of the subsequent part (B2, B3, B4) of said plurality of batteries (B1-B4) so that a flow of electrical energy coming from said power supply (30) can determine the charging thereof.

According to a further non-limiting aspect, said control unit (10) is configured to transmit, on said at least one control line (14), a numerical signal, in particular binary, optionally in which the "0s" and the "1s" are transmitted with pulses of different time extension.

According to a further non-limiting aspect, the control unit (10) comprises a plurality of charge enabling control lines (14), each operatively connected with a control input of a respective battery of said plurality of batteries (B1-B4); said control unit (10) being configured to select a specific battery of said plurality of batteries (B1-B4) by transmitting, in use, a control signal on one of said control lines (14).

According to a further non-limiting aspect, said control signal is intended to cause a switch of a supply controller or switch (44) of the specific battery so that a flow of electrical energy from said power supply (30) can determine the charging thereof.

According to a further non-limiting aspect, the control unit comprises at least one charge sensor, in particular a voltage sensor, electrically connected with a respective battery of said plurality of batteries (B1-B4), and in which the control unit (10) is configured to cause an interruption of the charge of the first part (B1) of said plurality of batteries (B1-B4) when said charge sensor detects a charge, in particular a voltage, which is greater with respect to a predetermined threshold value, and to automatically cause the selection of the subsequent part (B2, B3, B4) of said plurality of batteries (B1-B4) and a de-selection of said first part (B1) of said plurality of batteries (B1-B4).

According to a further non-limiting aspect, the control unit is configured to electronically select said at least a first part (B1) of said plurality of batteries (B1-B4) or, optionally, the at least one subsequent part (B2, B3, B4) of said plurality of batteries (B1-B4); said control unit (10) being configured to transmit a selection command on at least one control line (14) connected with at least one of said first part (B1) and said subsequent part (B2, B3, B4) of the plurality of batteries (B1-B4).

According to a further non-limiting aspect, said control line (14) ends on a control input (15) of at least one of said first part (B1) and said subsequent part (B2, B3, B4) of the plurality of batteries (B1-B4), optionally said control unit (10) being configured to transmit a selection command on a control line (14) uniquely associated with a battery of the plurality of batteries (B1-B4) which is intended to be charged.

According to a further non-limiting aspect, the control unit is configured to execute an electronic malfunction control and/or electronic control of an improper operating condition, performed, optionally automatically, on each battery of the plurality of batteries (B1-B4);

According to a further non-limiting aspect, the control unit (10) is configured to exclude at least one battery selected among the batteries of the plurality of batteries (B1-B4) when for said at least one battery of the plurality of batteries said malfunction and/or said improper operating condition is detected; the exclusion determining the exclusion of said selected battery from the power supply step.

According to a further non-limiting aspect, the malfunction comprises at least one of a lower operating voltage with respect to a first lower threshold or higher with respect to a second upper threshold, a lower operating temperature with respect to a first lower threshold or higher with respect to a second upper threshold.

According to a further non-limiting aspect, the plurality of batteries (B1-B4) is configured to be removed or inserted "hot", and/or the control unit (10) is configured and specifically intended to allow the removal or introduction of at least one battery of said plurality of batteries (B1-B4) "hot" and/or during at least the power supply and/or charging, without causing a power interruption of said at least one power user (101, 102) and/or without causing an interruption of a charging of the remaining batteries of the plurality of batteries (B1-B4).

According to a further non-limiting aspect, the control unit (10) is configured to detect a temperature (t) of at least one part of said plurality of batteries (B1-B4) by means of at least one temperature sensor, in particular by means of at least one temperature sensor operatively associated with said plurality of batteries (B1-B4), and preferably by means of a plurality of temperature sensors each operatively associated with a respective battery (B1-B4).

According to a further non-limiting aspect, the control unit (10) is configured for:
- electronically comparing a signal indicative of the temperature (t) assumed by at least one battery of said plurality of batteries (B1-B4) with a temperature threshold value (t_{TH}), and
- transmitting an activation signal to a respective fan for cooling said at least one battery of said plurality of batteries (B1-B4) when said signal indicates a temperature (t) greater than said temperature threshold (t_{TH});
the control unit (10) being configured for:
- electronically comparing a signal indicative of a plurality of signals indicative of the temperature (t) assumed by each battery of said plurality of batteries (B1-B4) with a temperature threshold value (t_{TH}), and
- transmitting an activation signal to a respective fan for cooling each of the batteries of the plurality of batteries (B1-B4) whose signal indicates a temperature (t) greater than said temperature threshold (t_{TH}).

According to a further non-limiting aspect, the control unit (10) is configured to perform a control of a number n of batteries (B1-B4) operatively connected with the control unit (10), and to electronically determine an enabling of an actuation of at least one priority power user (102) among the plurality of power users (101, 102), or of a priority power user (102) and of a secondary power user (101) among the plurality of power users (101, 102), as a function of said number n of batteries (B1-B4).

In accordance with the present disclosure, a control unit (10) for managing the charging and discharging of a plurality of batteries (B1-B4) housed in a tool or vehicle (100) is also described, in particular a user or vehicle for gardening or agriculture; in which the control unit (10) is configured to be in use operatively interposed between the plurality of batteries (B1-B4) and a plurality of power users (101, 102) of the tool or vehicle (100) and comprises:
- a charging operating configuration, wherein said control unit (10):
- selecting at least a first part (B1) of said plurality of batteries (B1-B4), enabling a charge thereof;
- at least a first power supply operating configuration, in which the control unit (10) causes a power supply of the plurality of power users (101, 102) of said tool or vehicle (100), determining, in use, a transfer of electrical energy simultaneously occurring from at least part of said plurality of batteries (B1-B4) to said plurality of power users (101, 102),
in which the control unit (10) is configured to perform a control of a number n of batteries (B1-B4) operatively connected with the control unit (10), and to electronically determine an enabling of an actuation of at least one priority power user (102) among the plurality of power users (101, 102), or of a priority power user (102) and of a secondary power user (101) among the plurality of power users (101, 102), as a function of said number n of batteries (B1-B4).

According to a further non-limiting aspect, in the charging operating configuration, the control unit (10) causes a selective charging, by a power supply (30) of said first part (B1) of said previously selected plurality of batteries (B1-B4).

According to a further non-limiting aspect, the enabling of the actuation allowed by the control unit (10) is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and is greater than the number k of batteries sufficient to allow enabling the actuation of the secondary power user (101), the actuation of the priority power user (102) and the secondary power user (101) is authorized.

According to a further non-limiting aspect, the control unit (10) is configured to electronically detect a voltage value of said at least a first part (B1) of the plurality of batteries (B1-B4), in particular when in said battery charging operating configuration;
said control unit (10) being configured to stop charging said at least a first part (B1) of the plurality of batteries (B1-B4) when a voltage value of said at least a first part (B1) of the plurality of batteries (B1-B4) reaches a maximum voltage threshold value (Vₘₐₓ), and/or being configured to electronically disable said at least a first part (B1) of the plurality of batteries (B1-B4), such that said at least a first part (B1) of the plurality of batteries (B1-B4) is excluded from the power supply of the at least one power user (101, 102) when the voltage of said at least a first part (B1) of the plurality of batteries (B1-B4) is below a minimum voltage threshold value (Vₘᵢₙ).

According to a further non-limiting aspect, the control unit (10) comprises at least one charge sensor, in particular a current sensor, electrically connected with at least one respective battery of said plurality of batteries (B1-B4), said control unit being configured to electronically detect, by means of said charge sensor, a value of a charging current supplied to said at least one part (B1) of the plurality of batteries (B1-B4) during the charging operating configuration;
the control unit (10) being configured to terminate said charging operating configuration of said at least one part (B1) of the plurality of batteries (B1-B4) when the current value exceeds a given maximum safety current value (Imax) and/or falls below a minimum charging current value (Imin).

According to a further non-limiting aspect, the control unit is configured to terminate said charging operating configuration of said at least one part (B1) of the plurality of batteries (B1-B4):
- immediately, when the charging current value is above said maximum safety value (Imax); or
- following a time equal to or greater than a determined waiting time (Tw) if the charging current value remains below said minimum charging current value (Imin) for said waiting time (Tw).

According to a further non-limiting aspect, the control unit (10), in said electronic control of said improper operating configuration, is configured to verify a voltage imbalance (Δ*V*(*Bₙ, B*_{*n*+*i*})) and/or a charge level imbalance (Δ*SoC*(*Bₙ, B*_{*n*+*i*})) between at least a first battery (Bn) and a second battery (Bn+i) of said plurality of batteries (B1-B4), in particular executing:
- a comparison, in particular an electronic comparison, between a charge level difference (Δ*SoC*(*Bₙ, B*_{*n*+*i*})) between said at least a first battery (Bn) and a second battery (Bn+i) and a first reference value (Vv1), and/or
- a comparison, in particular an electronic comparison, between a voltage imbalance (Δ*V*(*Bₙ, B*_{*n*+*i*})) between said at least a first battery (Bn) and a second battery (Bn+i) and a second reference value (Vv2).

According to a further non-limiting aspect, the control unit (10) is configured to disable said at least one power user (101, 102) if the charge level imbalance Δ*SoC*(*Bₙ, B*_{*n*+*i*}) between said at least a first battery (Bn) and a second battery (Bn+i) is greater than said first reference value (Vv1) and/or if the voltage imbalance (Δ*V*(*Bₙ, B*_{*n*+*i*})) between said at least a first battery (Bn) and a second battery (Bn+i) is greater than said second reference value (Vv2).

According to a further non-limiting aspect, the control unit (10) is configured and specifically intended to cause a selection and/or a limitation, in particular an electronic selection and/or limitation, of a maximum electrical power deliverable by each battery of the plurality of batteries (B1-B4).

According to a further non-limiting aspect, said control unit (10) is configured to transmit, in particular selectively and/or independently for each battery of the plurality of batteries (B1-B4), a power management signal to a switch, in particular a bidirectional power switch, of at least one battery selected among the batteries of said plurality of batteries (B1-B4).

According to a further non-limiting aspect, in the charging operating configuration, the control unit (10) is configured to charge at least a first part of the plurality of batteries (B1-B4) with a predefined charging current, optionally constant, until reaching a predetermined threshold voltage value; the control unit (10) comprising an operating configuration for completing a charging of said at least a first part of the plurality of batteries (B1-B4), occurring when the voltage of said at least a first part of the plurality of batteries (B1-B4) exceeds said predetermined threshold voltage value, in which a charging current of said at least a first part of the plurality of batteries (B1-B4) is progressively reduced, optionally to a substantially zero value.

In accordance with the present disclosure, a control unit (10) for managing the charging and discharging of a plurality of batteries (B1-B4) housed in a tool or vehicle (100) is also described, in particular a tool or vehicle for gardening or agriculture; in which the control unit (10) is configured to be in use operatively interposed between the plurality of batteries (B1-B4) and at least one power user (101, 102) of the tool or vehicle (100) and comprises at least a first power supply operating configuration, in which the control unit (10) causes a power supply of the at least one power user (101, 102) of said tool or vehicle (100), determining, in use, a transfer of electrical energy occurring simultaneously from at least part of said plurality of batteries (B1-B4) to at least one power user (101, 102),
in which the control unit (10) is configured and specifically intended to cause a selection and/or a limitation, in particular an electronic selection and/or limitation, of a maximum electrical power deliverable by each battery of the plurality of batteries (B1-B4).

According to a further non-limiting aspect, the control unit (10) comprises:
- a charging operating configuration, wherein said control unit (10):
- selecting a first part (B1) of said plurality of batteries (B1-B4), enabling a charge thereof;
- causing a selective charging, by a power supply (30) of said first part (B1) of said previously selected plurality of batteries (B1-B4).

According to a further non-limiting aspect, the control unit (10) is configured to be operatively connected, optionally removably by means of a connector (16), with a management system (20) forming part of said tool or vehicle (100); said management system (20) being operatively interposed between said control unit (10) and said at least one power user (101, 102).

According to a further non-limiting aspect, the management system (20) comprises, or is connected to, a power supply circuit of said tool or vehicle (100).

According to a further non-limiting aspect, the control unit (10) comprises a supply switch (20'), controllable by means of a control signal determining, in use, a switching between a closed configuration and an open configuration of said power switch; said supply switch (20') being configured and intended to determine the power supply or interruption of said at least one power user (101, 102).

### Further aspects related to the method and the control unit

In accordance with the present disclosure, a management method for powering a tool or vehicle (100) for gardening or agriculture is further described, even more in particular a lawnmower tractor, the method comprising:
- a power supply step of at least one power user (101, 102) of said tool or vehicle (100), the at least one power user (101, 102) comprising a priority power user (102) and a secondary power user (101), in which, in the power supply step, at least one among a first battery (B1) and/or a second battery (B2) of a plurality of batteries (B1-B4) configured to be removably installed on board said tool or vehicle (100) contributes to supplying said at least one power user (101, 102) by means of a power supply circuit;
- a step of enabling a power supply of the at least one priority power user (102), or an actuation of the priority power user (102) and the secondary power user (101), in which
- in the enabling step, an electronic control of at least one value among an electrical power, charge, voltage or current made available by the at least one battery connected to said power supply circuit is executed and/or an electronic control of a number n of batteries (B1-B4) installed on board said tool or vehicle (100) is executed and,
- in accordance with said at least one value among an electrical power, charge, voltage or current and/or in accordance with said number n of batteries (B1-B4), is electronically enabled, and optionally automatically:
   - the electrical power supply, by means of said power supply circuit, of only the priority power user (102); or
   - the electrical power supply, by means of said power supply circuit, of the priority power user (102) and the secondary power user (101).

According to a further non-limiting aspect, if said at least one value among an electrical power, charge, voltage or current is greater than a minimum threshold value, the electrical power supply is electronically enabled, by means of said power supply circuit, of the priority power user (102) and of the secondary power user (101) and if said at least one value among an electrical power, charge, voltage or current is less than or equal to a minimum threshold value, the electrical power supply is electronically disabled, by means of said power supply circuit, of the priority power user only (102) and/or the electrical power supply is electronically disabled, by means of said power supply circuit, of said secondary power user (101).

According to a further non-limiting aspect,
- as long as the number n of batteries (B1-B4) is less than a first number i of batteries sufficient to allow enabling the electrical power supply of the priority power user (102), the electrical power supply is electronically disabled by means of the power supply circuit of the priority power user (102) and the secondary power user (101);
- as long as the number n of batteries (B1-B4) is equal to or greater than said first number i of batteries sufficient to allow enabling the electrical power supply of the priority power user (102) and less than a second number k, greater than i, of batteries sufficient to allow enabling the electrical power supply of the priority power user (102) and the secondary power user (101), the method includes an electronic enabling of the electrical power supply of the priority power user (102) and an electronic disabling of the electrical power supply of the secondary power user (101);
- as long as the number n of batteries (B1-B4) is greater than said first number i of batteries sufficient to allow the electrical power supply of the priority power user (102) and greater than the number k of batteries sufficient to allow the electrical power supply of the secondary power user (101), the method includes an electronic enabling of the power supply of the priority power user (102) and the secondary power user (101).

According to a further non-limiting aspect, the electronic control of the at least one value among an electrical power, charge, voltage or current, made available by the at least one battery connected to said power supply circuit comprises transmitting a control signal from at least one among an electrical power, charge, voltage or current sensor to a control unit (10), and/or in which the electronic control of the number n of batteries (B1-B4) installed on board said tool or vehicle (100) comprises transmitting a battery presence control signal to said control unit (10).

According to a further non-limiting aspect, the control unit (10) is configured to cause, in use, the execution of the electronic, and optionally automatic, enabling step of:
- said electrical power supply, by means of said power supply circuit, of only the priority power user (102); or
- said electrical power supply, by means of said power supply circuit, of the priority power user (102) and the secondary power user (101).

According to a further non-limiting aspect, the electronic control of the number n of batteries (B1-B4) installed on board said tool or vehicle (100) comprises a step of verifying the presence of a voltage, in particular of a non-zero voltage, at at least one electrical contact susceptible in use to contact with at least one of said batteries (B1-B4) when installed on board the tool or vehicle (100),
optionally said voltage being the voltage of said at least one battery.

In accordance with the present disclosure a control unit (10) for a tool or vehicle (100) for gardening or agriculture is also described, in particular a lawnmower tractor, configured to be operatively connected with:
- at least one power user (101, 102) of said tool or vehicle (100), the at least one power user (101, 102) comprising a priority power user (102) and a secondary power user (101) and being configured to be electrically powered,
- a plurality of batteries (B1-B4), and in particular to be operatively connected with at least one among a first battery (B1) and/or a second battery (B2) of the plurality of batteries (B1-B4),

in which the plurality of batteries (B1-B4) is configured to be removably installed on board said tool or vehicle (100) and intended to power, at least in part, said at least one power user (101, 102), by means of a power supply circuit;
in which the control unit (10) is configured for:
   - executing an electronic control of at least one value among an electrical power, charge, voltage or current, made available by the at least one battery connected to said power supply circuit and/or an electronic control of a number n of batteries (B1-B4) installed on board said tool or vehicle (100),
   - electronically enabling, and optionally automatically, in accordance with said at least one value among an electrical power, charge, voltage or current and/or in accordance with said number n of batteries (B1-B4):
      - the electrical power supply, by means of said power supply circuit, of only the priority power user (102); or
      - the electrical power supply, by means of said power supply circuit, of the priority power user (102) and the secondary power user (101).

According to a further non-limiting aspect, the control unit is configured to electronically compare said at least one value among an electrical power, charge, voltage or current with a minimum threshold value, and if said at least one value among an electrical power, charge, voltage or current is greater than said minimum threshold value, the control unit (10) is configured to electronically enable the electrical power, by means of said power supply circuit, of the priority power user (102) and the secondary power user (101) and if said at least one value among an electrical power, charge, voltage or current is less than or equal to a minimum threshold value, the control unit (10) is configured to electronically disable the electrical power, by means of said power supply circuit, of the priority power user only (102) and/or to electronically disable the electrical power, by means of said power supply circuit, of said secondary power user (101).

According to a further non-limiting aspect, in the control unit,
- as long as the number n of batteries (B1-B4) is less than a first number i of batteries sufficient to allow enabling the electrical power supply of the priority power user (102), the control unit (10) is configured to electronically disable the electrical power supply, by means of the power supply circuit, of the priority power user (102) and the secondary power user (101);
- as long as the number n of batteries (B1-B4) is equal to or greater than said first number i of batteries sufficient to allow enabling the electrical power supply of the priority power user (102) and less than a second number k, greater than i, of batteries sufficient to allow enabling the electrical power supply of the priority power user (102) and the secondary power user (101), the control unit (10) is configured to electronically enable the electrical power supply of the priority power user (102) and to electronically disable the electrical power supply of the secondary power user (101);
- as long as the number n of batteries (B1-B4) is greater than said first number i of batteries sufficient to allow the electrical power supply of the priority power user (102) and greater than the number k of batteries sufficient to allow the electrical power supply of the secondary power user (101), the control unit (10) is configured to electronically enable the supply of the priority power user (102) and the secondary power user (101).

According to a further non-limiting aspect, the control unit (10) is configured to be connected with at least one among an electrical power, charge, voltage or current sensor and to receive, from said sensor, a control signal of at least one value among an electrical power, charge, voltage or current, made available by the at least one battery connected to said power supply circuit, and/or to receive a battery presence control signal, indicative of the number n of batteries (B1-B4) installed on board said tool or vehicle (100).

According to a further non-limiting aspect, the control unit (10) is configured for electronically enabling, and optionally automatically:
- said electrical power supply, by means of said power supply circuit, of only the priority power user (102); or
- said electrical power supply, by means of said power supply circuit, of the priority power user (102) and the secondary power user (101),
in accordance with said control signal.

According to a further non-limiting aspect, the control unit is configured to be operatively connected with at least one electrical contact susceptible in use to contact with at least one of said batteries (B1-B4) when installed on board the tool or vehicle (100), and in which
the battery presence control signal is a voltage signal, in particular of a non-zero voltage, taken from said electrical contact,
optionally in which said voltage signal is indicative of the voltage of said at least one battery.

In accordance with the present disclosure, a method for powering a tool or vehicle (100) for gardening or agriculture is further described, even more in particular a lawnmower tractor, the method comprising:
- a power supply step of at least one power user (101, 102) of said tool or vehicle (100), in which at least a first battery (B1) installed on board said tool or vehicle (100), optionally at least a first battery (B1) and a second battery (B2) of a plurality of batteries (B1-B4) installed on board said tool or vehicle (100), contributes to supplying said power user (101, 102) by means of a power supply circuit;
- a step of controlling the power supply of said at least one power user (101, 102) by means of at least one solid-state supply switch circuit (20s'), positioned in series with said at least a first battery (B1), optionally positioned in series with said plurality of batteries (B1-B4), and arranged between said at least a first battery (B1) and said at least one power user (101, 102), optionally arranged between said plurality of batteries (B1-B4) and said at least one power user (101, 102);
   wherein
- the solid-state supply switch circuit (20s') forms a unidirectional power switch, configured to be switched between a closed configuration, which allows the passage of an electrical current from the at least one battery (B1-B4), optionally from the plurality of batteries (B1-B4), to the at least one power user (101, 102) and an open operating configuration, which prevents the passage of said electrical current from the at least one battery (B1), optionally from the plurality of batteries (B1-B4) to the at least one power user (101, 102), configured to allow the transit of an electrical current in only one direction, and
- the step of controlling the power supply of said at least one power user (101, 102) comprises at least one switching between said closed configuration and said open configuration.

According to a further non-limiting aspect, said solid-state supply switch circuit (20s') comprises at least a first field-effect transistor (201) and at least a second field-effect transistor (202), in particular at least a first MOSFET (201) and a second MOSFET (202), and a first diode (301) and a second diode (302), in which the first diode (301) is connected between a drain terminal (D1) and a source terminal (S1) of the first field-effect transistor (201), and in which the second diode (302) is connected between a drain terminal (D2) and a source terminal (S2) of the second field-effect transistor (202).

According to a further non-limiting aspect, the step of controlling the power supply of said at least one power user (101, 102) comprises supplying a first bias signal on a gate terminal (G1) of the first field-effect transistor (201) and a second bias signal on a gate terminal (G2) of the second field-effect transistor (202) so that said first field-effect transistor (201), together with said first diode (301), behaves like a substantially ideal diode and so that said second field-effect transistor (202), together with said second diode (302), behaves like a solid-state switch having a closed configuration and an open configuration.

According to a further non-limiting aspect, in the control step, the switching between said closed configuration and said open configuration comprises a switching of the assembly formed by said second diode (302) and by the second field-effect transistor (202) between said closed configuration and said open configuration.

According to a further non-limiting aspect, the method comprises:
- a selection step, a first part (B1) of said plurality of batteries (B1-B4) being selected in said selection step;
- a charging step, said first part (B1) of said plurality of batteries (B1-B4) being selectively charged in said charging step;
- at least one further selection step, a further part (B2, B3, B4) of said plurality of batteries (B1-B4) being selected in said further selection step;
- at least one further charging step, said further part (B2, B3, B4) of said plurality of batteries (B1-B4) being selectively charged in said further charging.

According to a further non-limiting aspect, in the power supply step, said at least one power user (101, 102) of said tool or vehicle (100) is powered by a transfer of electrical energy to said at least one power user (101, 102) simultaneously occurring from said first part (B1) of said plurality of batteries (B1-B4) and from said further part (B2, B3, B4) of said plurality of batteries (B1-B4).

According to a further non-limiting aspect, said selection step, said charging step, said at least one further selection step and said at least one power supply step are controlled by a control unit (10), and in which the control step of the power supply of said at least one power user (101, 102) is controlled by said control unit (10).

According to a further non-limiting aspect, the method comprises a step of configuring a control unit (10) in use controlling at least one among an activation of an electrical power supply, a deactivation of the electrical power supply and an adjustment of the electrical power supplied, by at least part of the plurality of batteries (B1-B4), in particular by at least one among the first battery (B1) and/or the second battery (B2), to said at least one power user (101, 102).

According to a further non-limiting aspect, in said configuration step, the control unit (10) allows the connection or disconnection of at least one battery of the plurality of batteries (B1-B4), in particular of one among the first battery (B1) and the second battery (B2), from the power supply circuit, without interruption of the electrical power supplied to said at least one power user (101, 102).

According to a further non-limiting aspect the at least one power user (101, 102) comprises a priority power user (102) and a secondary power user (101).

According to a further non-limiting aspect, the method comprises:
- a step of enabling a power supply of the at least one priority power user (102), or an actuation of the priority power user (102) and the secondary power user (101), in which:
- in the enabling step an electronic control of at least one value among an electrical power, charge, voltage or current made available by the at least one battery connected to said power supply circuit is executed and/or an electronic control of a number n of batteries (B1-B4) installed on board said tool or vehicle (100) is executed.

According to a further non-limiting aspect:
- in accordance with said at least one value among an electrical power, charge, voltage or current and/or in accordance with said number n of batteries (B1-B4), is electronically enabled, and optionally automatically:
   - the electrical power supply, by means of said power supply circuit, of only the priority power user (102); or
   - the electrical power supply, by means of said power supply circuit, of the priority power user (102) and the secondary power user (101).

In accordance with the present disclosure a control unit (10) for a tool or vehicle (100) for gardening or agriculture is also described, in particular a lawnmower tractor, configured to be operatively connected with:
- at least one power user (101, 102) of said tool or vehicle (100), the at least one power user (101, 102) being configured to be electrically powered,
- at least a first battery (B1), installed on board said tool or vehicle (100), optionally at least a first battery (B1) and a second battery (B2) of a plurality of batteries (B1-B4) installed on board said tool or vehicle (100), and in which, in use, at least the first battery (B1) and optionally at least the first battery (B1) and the second battery (B2) of said plurality of batteries (B1-B4) contribute to powering said at least one power user (101, 102), by means of a power supply circuit;
the control unit (10) comprising a solid-state supply switch circuit (20s'), positioned in series with said at least a first battery (B1), optionally positioned in series with said plurality of batteries (B1-B4), and arranged between said at least a first battery (B1) and said at least one power user (101, 102), optionally arranged between said plurality of batteries (B1-B4) and said at least one power user (101, 102);
- said solid-state supply switch circuit (20s') forming a unidirectional power switch, configured to be switched between a closed configuration, which allows the passage of an electrical current from the at least one battery (B1-B4), optionally from the plurality of batteries (B1-B4), to the at least one power user (101, 102) and an open operating configuration, which prevents the passage of said electrical current from the at least one battery (B1), optionally from the plurality of batteries (B1-B4) to the at least one power user (101, 102), configured to allow the transit of an electrical current in only one direction,
said control unit (10) comprising a power supply operating configuration in which it controls the power supply of said at least one power user (101, 102) by means of the solid-state supply switch circuit (20s'), controlling at least one switching between said closed configuration and said open configuration of said solid-state supply switch circuit (20s').

According to a further non-limiting aspect, said solid-state supply switch circuit (20s') comprises at least a first field-effect transistor (201) and at least a second field-effect transistor (202), in particular at least a first MOSFET (201) and a second MOSFET (202), and a first diode (301) and a second diode (302), in which the first diode (301) is connected between a drain terminal (D1) and a source terminal (S1) of the first field-effect transistor (201), and in which the second diode (302) is connected between a drain terminal (D2) and a source terminal (S2) of the second field-effect transistor (202).

According to a further non-limiting aspect, the control unit (10) is configured to control the power supply of said at least one power user (101, 102), supplying a first bias signal on a gate terminal (G1) of the first field-effect transistor (201) and a second bias signal on a gate terminal (G2) of the second field-effect transistor (202) so that said first field-effect transistor (201), together with said first diode (301), behaves like a substantially ideal diode and so that said second field-effect transistor (202), together with said second diode (302), behaves like a solid-state switch having a closed configuration and an open configuration.

According to a further non-limiting aspect, the control unit (10) is configured to control a switching between said closed configuration and said open configuration of said solid-state supply switch circuit (20s') by controlling a switching of the assembly formed by said second diode (302) and by the second field-effect transistor (202) between said closed configuration and said open configuration.

According to a further non-limiting aspect, the control unit (10) comprises:
- a charging operating configuration, wherein said control unit (10):
   - selects a first part (B1) of said plurality of batteries (B1-B4),
   - causes a selective charging, by a power supply (30) of said first part (B1) of said plurality of batteries (B1-B4),
   - selects a further part (B2, B3, B4) of said plurality of batteries (B1-B4) and
   - causes a selective charging, by a power supply (30) of said further part (B2, B3, B4) of said plurality of batteries (B1-B4).

According to a further non-limiting aspect, in the power supply operating configuration, in which the control unit (10) causes a power supply of the at least one power user (101, 102) of said tool or vehicle (100), determining, in use, a transfer of electrical energy to said at least one power user (101, 102) simultaneously occurring from said first part (B1) of said plurality of batteries (B1-B4) and from said further part (B2, B3, B4) of said plurality of batteries (B1-B4).

According to a further non-limiting aspect, the control unit (10) causes a power supply of the at least one power user (101, 102) of said tool or vehicle (100), determining, in use, a transfer of electrical energy to said at least one power user (101, 102) simultaneously occurring from each battery of said plurality of batteries (B1-B4).

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102).

According to a further non-limiting aspect, the control unit (10) is configured for:
- executing an electronic control of at least one value among an electrical power, charge, voltage or current, made available by the at least one battery connected to said power supply circuit and/or an electronic control of a number n of batteries (B1-B4) installed on board said tool or vehicle (100).

According to a further non-limiting aspect, the control unit (10) is configured for:
- electronically enabling, and optionally automatically, in accordance with said at least one value among an electrical power, charge, voltage or current and/or in accordance with said number n of batteries (B1-B4):
   - the electrical power supply, by means of said power supply circuit, of only the priority power user (102); or
   - the electrical power supply, by means of said power supply circuit, of the priority power user (102) and the secondary power user (101).

According to a further non-limiting aspect:
the at least one power user (101, 102) comprises a priority power user (102) and a secondary power user (101),
- and the control unit (10) is configured to cause a power supply of the at least one priority power user (102), or an actuation of the priority power user (102) and the secondary power user (101).

According to a further non-limiting aspect, the control unit (10) is configured to execute an electronic control of at least one value among an electrical power, charge, voltage or current, made available by the at least one battery connected to said power supply circuit and/or to execute an electronic control of a number n of batteries (B1-B4) installed on board said tool or vehicle (100).

According to a further non-limiting aspect, said electronic control is such that, in accordance with said at least one value among an electrical power, charge, voltage or current and/or in accordance with said number n of batteries (B1-B4).

According to a further non-limiting aspect, the control unit (10) electronically enables, and optionally automatically:
- the electrical power supply, by means of said power supply circuit, of only the priority power user (102); or
- the electrical power supply, by means of said power supply circuit, of the priority power user (102) and the secondary power user (101).

In accordance with the present disclosure, a management method for powering a tool or vehicle (100) for gardening or agriculture is further described, even more in particular a lawnmower tractor, the method comprising:
- a power supply step of at least one power user (101, 102) of said tool or vehicle (100), in which at least one among a first battery (B1) and/or a second battery (B2) of a plurality of batteries (B1-B4) configured to be removably installed on board said tool or vehicle (100), contributes to supplying said power user (101, 102) by means of a power supply circuit;
- an electronic measurement step of an electrical power (P(t)) instantly absorbed by said at least one power user (101, 102), in which the electronic measurement step of the instantly absorbed power (P(t)) is executed by a control unit (10) configured to control the power supply of said at least one power user (101, 102) or is executed by an electronic sensor, operatively connected with said control unit (10),
- an electronic limitation step of the electrical power supplied by said at least a first battery (B1) and/or a second battery (B2), to said at least one power user (101, 102) by means of the power supply circuit, said electronic limitation step determining a limitation of the electrical power supplied by said at least a first battery (B1) and/or a second battery (B2) to at least a first maximum power value.

According to a further non-limiting aspect, said electrical power supplied by said at least a first battery (B1) and/or by said at least a second battery (B2) comprises at least one electric current supplied by said at least a first battery (B1) and/or by said at least a second battery (B2).

According to a further non-limiting aspect, the step of electronically limiting the electrical power supplied by said at least a first battery (B1) and/or a second battery (B2) to said at least one power user (101, 102) comprises a step of electronically limiting an electric current supplied by said at least a first battery (B1) and/or a second battery (B2) to said at least one power user (101, 102).

According to a further non-limiting aspect, the first battery (B1) and the second battery (B2) are electrically connected in parallel to supply the at least one power user (101, 102) by means of said power supply circuit.

According to a further non-limiting aspect, the method comprises:
- a storage step of at least one datum related to a maximum electrical power deliverable by at least one among said first battery (B1) and said second battery (B2), optionally a storage step of a first datum related to the maximum power deliverable by said first battery (B1) and a second datum related to the maximum power deliverable by said second battery (B2), and/or
- an electronic retrieval step of said at least one datum related to a maximum electrical power deliverable by at least one among said first battery (B1) and said second battery (B2), optionally an electronic retrieval step of said first datum related to the maximum power deliverable by said first battery (B1) and said second datum related to the maximum power deliverable by said second battery (B2).

According to a further non-limiting aspect, the maximum deliverable electrical power comprises a maximum deliverable electrical current and/or the datum related to a maximum deliverable electrical power comprises a maximum deliverable electrical current datum.

According to a further non-limiting aspect, the first maximum power value corresponds to said datum and optionally in which the first maximum power value corresponds to the first datum and in which a second maximum power value corresponds to said second datum.

According to a further non-limiting aspect, the electronic limitation of the electrical power supplied by said at least a first battery (B1) and/or a second battery (B2) only occurs when the electrical power supplied to said at least one power user (101, 102) exceeds the value corresponding to said datum, optionally to said first datum and/or to said second datum.

According to a further non-limiting aspect:
- said electronic limitation step occurs immediately when a power instantly requested by said at least one power user (101, 102) causes exceeding said at least a first maximum power value, optionally causes exceeding at least one of said at least a first maximum power value and said second maximum power value, or
- said electronic limitation step occurs when a power instantly requested by said at least one power user (101, 102) causes exceeding said at least a first maximum power value, optionally causes exceeding at least one of said at least a first maximum power value and said second maximum power value, for at least one predefined time interval (Δtₚₘₐₓ).

According to a further non-limiting aspect, said first maximum power value comprises, or is, a first maximum electrical current value, and/or said second maximum electrical power value comprises, or is, a second maximum electrical current value.

According to a further non-limiting aspect, the limitation step comprises a transmission of a power limitation signal (Sₗᵢₘ) to at least one power limitation circuit, said power limitation circuit being positioned within said at least a first battery (B1) and/or a second battery (B2) of said plurality of batteries (B1-B4) and/or being positioned within said control unit (10).

According to a further non-limiting aspect the at least one power user (101, 102) comprises a priority power user (102) and a secondary power user (101).

According to a further non-limiting aspect, the method comprises a step of enabling a power supply of the at least one priority power user (102), or an actuation of the priority power user (102) and the secondary power user (101), in which in the enabling step an electronic control of at least one value among an electrical power, charge, voltage or current, made available by the at least one battery connected to said power supply circuit is executed and/or an electronic control of a number n of batteries (B1-B4) installed on board said tool or vehicle (100) is executed.

According to a further non-limiting aspect:
- in accordance with said at least one value among an electrical power, charge, voltage or current and/or in accordance with said number n of batteries (B1-B4), is electronically enabled, and optionally automatically:
   - the electrical power supply, by means of said power supply circuit, of only the priority power user (102); or
   - the electrical power supply, by means of said power supply circuit, of the priority power user (102) and the secondary power user (101).

According to a further non-limiting aspect, the method comprises a step of electronically comparing a signal indicative of the temperature (t) assumed by at least one battery of said plurality of batteries (B1-B4) with a temperature threshold value (t_{TH}).

According to a further non-limiting aspect, the method comprises:
- an activation step of at least one fan for cooling said at least one battery of said plurality of batteries (B1-B4) when the signal indicates a temperature (t) higher than said temperature threshold (t_{TH}), and/or
- a forced activation step of said at least one fan for cooling said at least one battery of said plurality of batteries (B1-B4) when the electrical power (P(t)) instantly absorbed by said at least one power user (101, 102) reaches a predefined power value requiring an active cooling, optionally in which said predefined power value requiring an active cooling is substantially equal to 2/3 of said first maximum power value and preferably substantially equal to said first maximum power value.

According to a further non-limiting aspect, the method comprises a step of configuring a control unit (10) in use controlling at least one among an activation of an electrical power supply, a deactivation of the electrical power supply and an adjustment of the electrical power supplied, by at least part of the plurality of batteries (B1-B4), in particular by at least one among the first battery (B1) and/or the second battery (B2), to said at least one power user (101, 102),
in which in said configuration step, the control unit (10) allows the connection or disconnection of at least one battery of the plurality of batteries (B1-B4), in particular of one among the first battery (B1) and the second battery (B2), from the power supply circuit, without interruption of the electrical power supplied to said at least one power user (101, 102).

In accordance with the present disclosure a control unit (10) for a tool or vehicle (100) for gardening or agriculture is also described, in particular a lawnmower tractor, configured to be operatively connected with:
- at least one power user (101, 102) of said tool or vehicle (100), the at least one power user (101, 102) being configured to be electrically powered,
- at least one of a first battery (B1) and/or a second battery (B2) of the plurality of batteries (B1-B4),

in which the plurality of batteries (B1-B4) is configured to be removably installed on board said tool or vehicle (100) and is intended to power, at least in part, said at least one power user (101, 102), by means of a power supply circuit;
the control unit (10) being configured to be operatively connected with, or comprising, at least one electrical sensor intended for measuring a power instantly absorbed (P(t)) by said at least one power user (101, 102),
the control unit (10) is configured to limit to at least a first maximum power value an electrical power supplied by said at least a first battery (B1) and/or a second battery (B2), to said at least one power user (101, 102) by means of the power supply circuit.

According to a further non-limiting aspect, the first battery (B1) and the second battery (B2) are electrically connected in parallel to supply the at least one power user (101, 102) by means of said power supply circuit.

According to a further non-limiting aspect, the control unit (10) is configured for:
- storing at least one datum related to a maximum electrical power deliverable by at least one among said first battery (B1) and said second battery (B2), optionally for storing a first datum related to the maximum power deliverable by said first battery (B1) and a second datum related to the maximum power deliverable by said second battery (B2), and/or
- electronically retrieving said at least one datum related to a maximum electrical power deliverable by at least one among said first battery (B1) and said second battery (B2), optionally electronically retrieving said first datum related to the maximum power deliverable by said first battery (B1) and said second datum related to the maximum power deliverable by said second battery (B2).

According to a further non-limiting aspect, the first maximum power value corresponds to said datum and optionally in which the first maximum power value corresponds to the first datum and in which a second maximum power value corresponds to said second datum.

According to a further non-limiting aspect, the control unit (10) is configured to electronically limit the electrical power supplied by said at least a first battery (B1) and/or a second battery (B2) only when the electrical power supplied to said at least one power user (101, 102) exceeds the value corresponding to said datum, optionally to said first datum and/or to said second datum.

According to a further non-limiting aspect, the control unit is configured to electronically limit the electrical power immediately when a power instantly requested by said at least one power user (101, 102) causes exceeding said at least a first maximum power value, optionally causing exceeding at least one of said at least a first maximum power value and said second maximum power value,
or is configured to electronically limit the electrical power when a power instantly requested by said at least one power user (101, 102) causes exceeding said at least a first maximum power value, optionally causes exceeding at least one of said at least a first maximum power value and said second maximum power value, for at least one predefined time interval (Δtₚₘₐₓ).

According to a further non-limiting aspect, the control unit (10) is configured to limit the electrical power by transmitting a power limitation signal (Sₗᵢₘ) to at least one power limitation circuit, said power limitation circuit being positioned within said at least a first battery (B1), and/or transmitting said power limitation signal (Sₗᵢₘ) to a second battery (B2) of said plurality of batteries (B1-B4) and/or being positioned within said control unit (10).

According to a further non-limiting aspect, the control unit is configured for:
- executing an electronic control of at least one value among an electrical power, charge, voltage or current, made available by the at least one battery connected to said power supply circuit and/or an electronic control of a number n of batteries (B1-B4) installed on board said tool or vehicle (100).

According to a further non-limiting aspect, the control unit is configured for:
- electronically enabling, and optionally automatically, in accordance with said at least one value among an electrical power, charge, voltage or current and/or in accordance with said number n of batteries (B1-B4):
   - the electrical power supply, by means of said power supply circuit, of only the priority power user (102); or
   - the electrical power supply, by means of said power supply circuit, of the priority power user (102) and the secondary power user (101).

According to a further non-limiting aspect, the control unit is configured for:
- electronically comparing a signal indicative of the temperature (t) assumed by at least one battery of said plurality of batteries (B1-B4) with a temperature threshold value (t_{TH}), and transmitting an activation signal to at least one fan for cooling said at least one battery of said plurality of batteries (B1-B4) when said signal indicates a temperature (t) higher than said temperature threshold (t_{TH}), and/or
- transmitting an activation signal to at least one fan for cooling said at least one battery of said plurality of batteries (B1-B4) when the electrical power (P(t)) instantly absorbed by said at least one power user (101, 102) reaches a predefined power value requiring an active cooling, optionally in which said predefined power value requiring an active cooling is substantially equal to 2/3 of said first maximum power value and preferably substantially equal to said first maximum power value.

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102).

In accordance with the present disclosure, a management method for powering a tool or vehicle (100) for gardening or agriculture is further described, even more in particular a lawnmower tractor, the method comprising:
- a power supply step of at least one power user (101, 102) of said tool or vehicle (100), in which at least one among a first battery (B1) and/or a second battery (B2) of a plurality of batteries (B1-B4) installed on board said tool or vehicle (100), contributes to supplying said power user (101, 102) by means of a power supply circuit;
a step of configuring a control unit (10) in use controlling at least one among an activation of an electrical power supply, a deactivation of the electrical power supply and an adjustment of the electrical power supplied, by at least part of the plurality of batteries (B1-B4), in particular by at least one among the first battery (B1) and/or the second battery (B2), to said at least one power user (101, 102), in which
- in said configuration step, the control unit (10) allows the connection or disconnection of at least one battery of the plurality of batteries (B1-B4), in particular of one among the first battery (B1) and the second battery (B2), from the power supply circuit, without interruption of the electrical power supplied to said at least one power user (101, 102).

According to a further non-limiting aspect, following the configuration step, a connection or disconnection of said at least one battery of the plurality of batteries (B1-B4), in particular a connection or disconnection of one among said first battery (B1) and said second battery (B2), a step of filtering and/or limiting voltage and/or current peaks and/or drops is included upstream of said at least one power user (101, 102), in particular upstream of said power supply circuit of the power user (101, 102).

According to a further non-limiting aspect, the method comprises a step of connecting or disconnecting said at least one battery of the plurality of batteries (B1-B4) comprising a step of introducing or extracting said at least one battery from a respective compartment (V1, V2) positioned on said tool or vehicle (100).

According to a further non-limiting aspect, the method comprises a step of enabling an actuation of the at least one priority power user (102) among the plurality of power users (101, 102), or an actuation of the priority power user (102) and the secondary power user (101) among the plurality of power users (101, 102), as a function of a number n of batteries (B1-B4),
optionally in which the enabling of the actuation is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and greater than the number k of batteries sufficient to allow enabling the actuation of the secondary power user (101), the actuation of the priority power user (102) and the secondary power user (101) is authorized.

According to a further non-limiting aspect, the control unit (10) allows the connection or disconnection of at least one battery of the plurality of batteries (B1-B4), in particular of one among the first battery (B1) and the second battery (B2), from the power supply circuit, without interruption of an electrical power supply provided to said priority power user (102) and determining a powering down or an electrical power supply of said secondary power user (101) in accordance with at least one value among an electrical power, charge, voltage or current, made available by the at least one battery connected to said power supply circuit.

According to a further non-limiting aspect, following said disconnection step, the control unit (10) automatically performs an electronic verification step of whether at least one among an electrical power, charge, voltage or current, made available by the at least one battery connected to said power supply circuit is sufficient to power the at least one power user (101, 102), preferably the at least one among said priority power user (102) and said secondary power user (101), and following said electronic verification step, and in accordance with at least one among the electrical power, charge, voltage or current, made available by the at least one battery residually connected to said power supply circuit, executes at least one among the following actions:
- an electronic limitation of a power which can be provided to said at least one power user (101, 102) and/or of power absorbable by said at least one power user (101, 102), preferably an electronic limitation of the power which can be provided to said priority power user (102) and/or said secondary power user (101), and/or of power absorbable by said priority power user (102) and/or by said secondary power user (101);
- said powering down of said secondary power user (101);
- a powering down of said priority power user (102),
optionally allowing an electrical power supply of at least itself, and of electrical control circuits of said priority (102) and/or secondary (101) power user.

In accordance with the present disclosure a control unit (10) for a tool or vehicle (100) for gardening or agriculture is also described, in particular a lawnmower tractor, configured to be operatively connected with:
- at least one power user (101, 102) of said tool or vehicle (100), the at least one power user (101, 102) being configured to be electrically powered,
- a plurality of batteries (B1-B4), and in particular to be operatively connected with at least one among a first battery (B1) and/or a second battery (B2) of the plurality of batteries (B1-B4),
in which the plurality of batteries (B1-B4) is configured to be installed on board said tool or vehicle (100) and is intended to power, at least in part, said at least one power user (101, 102), by means of a power supply circuit;
the control unit (10) is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102).

According to a further non-limiting aspect, the control unit comprises a step of filtering and/or limiting voltage and/or current peaks and/or drops, executing, in use, a filtering and/or limiting of voltage and/or current peaks and/or drops, upstream of said at least one power user (101, 102), in particular upstream of said power supply circuit of the power user (101, 102).

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102), following an introduction or extraction of the first battery (B1) or the second battery (B2) from a respective compartment (V1, V2) positioned on said tool or vehicle (100).

According to a further non-limiting aspect said control unit is specifically intended to cause a selection and/or a limitation, in particular an electronic selection and/or limitation, of a maximum electrical power deliverable by each battery of the plurality of batteries (B1-B4) and in which said control unit (10) is configured to transmit, in particular selectively and/or independently for each battery of the plurality of batteries (B1-B4), a power management signal to a switch, in particular a bidirectional power switch, of at least one battery selected from the batteries of said plurality of batteries (B1-B4) and/or
in which said control unit (10) is configured to enable an actuation of the priority power user (102) among the plurality of power users (101, 102), or an actuation of the priority power user (102) and the secondary power user (101) among the plurality of power users (101, 102), as a function of the number n of batteries (B1-B4).

According to a further non-limiting aspect, the enabling of the actuation is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and greater than the number k of batteries sufficient to allow enabling the actuation of the secondary power user (101), the actuation of the priority power user (102) and the secondary power user (101) is authorized.

According to a further non-limiting aspect, the control unit is configured to allow the connection or disconnection of at least one battery of the plurality of batteries (B1-B4), in particular of one among the first battery (B1) and the second battery (B2), from the power supply circuit, without interruption of an electrical power supply provided to said at least one priority power user (102) and to determine a powering down or an electrical power supply of said secondary power user (101) in accordance with at least one value among an electrical power, charge, voltage or current, made available by the at least one battery connected to said power supply circuit.

According to a further non-limiting aspect, in use, following the disconnection of the at least one battery, the control unit (10) is configured to perform an automated electronic verification of whether at least one among an electrical power, charge, voltage or current, made available by the at least one battery connected to said power supply circuit is sufficient to power the at least one power user (101, 102), preferably the at least one among said priority power user (102) and said secondary power user (101), and is configured to perform, following said electronic verification, and in accordance with at least one value among an electrical power, charge, voltage or current, made available by the at least one battery residually connected to said power supply circuit, at least one among:
- an electronic limitation of a power which can be provided to said at least one power user (101, 102) and/or of power absorbable by said at least one power user (101, 102), preferably an electronic limitation of the power which can be provided to said priority power user (102) and/or said secondary power user (101), and/or of power absorbable by said priority power user (102) and/or by said secondary power user (101);
- said powering down of said secondary power user (101);
- a powering down of said priority power user (102),
optionally allowing an electrical power supply of at least itself, and of electrical control circuits of said priority (102) and/or secondary (101) power user.

According to a further non-limiting aspect, the control unit (10) is configured to electronically identify one or more of the batteries (B1-B4) installed on the tool or vehicle for gardening or agriculture, preferably to uniquely identify one or more of the batteries (B1-B4) installed on board said tool or vehicle for gardening or agriculture.

According to a further non-limiting aspect, the control unit (10) is configured to transmit to a remote electronic device at least one data identifier of said one or more batteries (B1-B4), optionally electronically associated with a residual charge and/or voltage datum of said one or more batteries (B1-B4), preferably by means of a wireless interface module.

According to a further non-limiting aspect, the method comprises an electronic identification step of one or more of the batteries (B1-B4) installed on said tool or vehicle for gardening or agriculture, said identification step being a unique identification step of one or more of the batteries B1-B4) installed on said tool or vehicle for gardening or agriculture.

According to a further non-limiting aspect, the method comprises a step of transmitting to a remote electronic device at least one data identifier of said one or more batteries (B1-B4), optionally electronically associated to a residual charge and/or voltage datum of said one or more batteries (B1-B4), the transmission step occurring by means of a wireless interface.

### Vehicle for gardening or agriculture

In accordance with the present disclosure, a vehicle for gardening or agriculture (100) is disclosed, said vehicle comprising at least one power user (101, 102), in particular at least one traction motor (102) for the movement of the vehicle itself, said vehicle for gardening or agriculture (100) comprising a plurality of batteries (B1-B4) electrically connected with said power user (101, 102) and comprising a control unit (10) according to one or more of the aspects disclosed herein.

According to a further non-limiting aspect, said vehicle for gardening or agriculture (100) is a lawnmower tractor. According to a further non-limiting aspect, the power user (101, 102) comprises at least one traction motor (102).

According to a further non-limiting aspect, the at least one power user (101, 102) comprises a mowing plate or bar (101).

According to a further non-limiting aspect, the mowing plate or bar (101) is positioned in a lower portion of said lawnmower tractor, in particular below the chassis of said lawnmower tractor.

According to a further non-limiting aspect, the vehicle for gardening or agriculture (100) comprises at least one pair of tractor wheels, or tracks, (105) operatively connected with said at least one traction motor (102).

According to a further non-limiting aspect, the vehicle for gardening or agriculture (100), in particular said lawnmower tractor, comprises a driving seat (103).

According to a further non-limiting aspect, the vehicle for gardening or agriculture (100) comprises a first and a second traction motor coupled to a first and a second tractor wheel or tractor track (105), respectively.

According to a further non-limiting aspect, said first and second traction motor are independently controllable, optionally by means of said steering device (104).

According to a further non-limiting aspect, the vehicle for gardening or agriculture (100) comprises at least a first axle, or front axle, and a second axle, or rear axle.

According to a further non-limiting aspect, the vehicle for gardening or agriculture (100) comprises at least one compartment (V1-V3) configured and specifically intended to house said plurality of batteries (B1-B4).

According to a further non-limiting aspect, said at least one compartment (V1-V3) is arranged in a substantially central position, optionally barycentric, of said vehicle for gardening or agriculture (100) and/or substantially below said driving seat (103).

According to a further non-limiting aspect, said at least one compartment (V1-V3) comprises at least one slide configured to allow the introduction of at least part of said plurality of batteries (B1-B4) within said at least one compartment (V1-V3) and/or to allow the extraction of at least part of said plurality of batteries (B1-B4) from said at least one compartment (V1-V3).

According to a further non-limiting aspect, said at least one compartment (V1-V3) comprises at least one door, provided to protect an internal cavity of the compartment adapted to house at least one of said plurality of batteries (B1-B4).

According to a further non-limiting aspect, said at least one compartment (V1-V3) comprises at least one fan, controllable at least in activation or deactivation, intended to cause a cooling of at least part of said plurality of batteries, and/or at least one battery of said plurality of batteries (B1-B4) comprises at least one fan, controllable at least in activation or deactivation, intended to cause a cooling thereof.

According to a further non-limiting aspect, the tool or vehicle (100) comprises a management system (20) operatively interposed between said control unit (10) and said at least one power user (101, 102), optionally in which the management system (20) is removably connected by means of a connector (16), with said control unit (10).

According to a further non-limiting aspect, the management system (20) comprises a power switch (20s) controllable in switching between opening and closing by a control signal, optionally coming from a circuit or contact key (42) of said tool or vehicle (100).

According to a further non-limiting aspect, said power switch (20s) is operatively connected with the power supply circuit of the at least one power user (101, 102).

According to a further non-limiting aspect, said power switch (20s) and said internal power switch are placed in series.

According to the present disclosure, a tool or vehicle (100) for gardening or agriculture is further disclosed, in particular a lawnmower tractor, comprising:
- at least one power user (101, 102) configured to be electrically powered,
- a power supply circuit for said at least one power user (101, 102),
- a plurality of batteries (B1-B4), in particular comprising at least a first battery (B1) and a second battery (B2), said plurality of batteries (B1-B4) being configured to power said at least one power user (101, 102),
- a control unit (10) operatively connected to said at least one power user (101, 102) and to said plurality of batteries (B1-B4),
wherein
the control unit (10) is configured to allow the connection or disconnection of at least one battery of the plurality of batteries (B1-B4), in particular of one among the first battery (B1) and the second battery (B2), from the power supply circuit, without interruption of an electrical power supply provided to said at least one power user (101, 102).

According to a further non-limiting aspect, the control unit comprises a step of filtering and/or limiting voltage and/or current peaks and/or drops, executing, in use, a filtering and/or limiting of voltage and/or current peaks and/or drops, upstream of said at least one power user (101, 102), in particular upstream of said power supply circuit of the power user (101, 102).

According to a further non-limiting aspect, the tool or vehicle (100) comprises at least one compartment (V1, V2) intended to contain at least one among said first battery (B1) and said second battery (B2) and in which the control unit (10) is configured to allow the connection or disconnection of at least one of the plurality of batteries (B1-B4), in particular of one among the first battery (B1) and the second battery (B2), from the power supply circuit, without interruption of an electrical power supply provided to said at least one power user (101, 102), following an introduction or extraction of the first battery (B1) or the second battery (B2) from the respective compartment (V1, V2).

According to a further non-limiting aspect, the tool or vehicle (100) comprises a plurality of power users (101, 102) comprising a priority power user (102) and a secondary power user (101),
and said control unit is specifically intended to cause a selection and/or a limitation, in particular an electronic selection and/or limitation, of a maximum electrical power deliverable by each battery of the plurality of batteries (B1-B4) and in which said control unit (10) is configured to transmit, in particular selectively and/or independently for each battery of the plurality of batteries (B1-B4), a power management signal to a switch, in particular a bidirectional power switch, of at least one battery selected from the batteries of said plurality of batteries (B1-B4) and/or
said control unit (10) is configured to enable an actuation of the priority power user (102) among the plurality of power users (101, 102), or an actuation of the priority power user (102) and the secondary power user (101) among the plurality of power users (101, 102), as a function of the number n of batteries (B1-B4),

According to a further non-limiting aspect, the enabling of the actuation is such that:
- as long as the number n of batteries (B1-B4) is less than a first number i of batteries sufficient to allow enabling the actuation of the priority power user (102), the actuation of the priority power user (102) and the secondary power user (101) is denied;
- as long as the number n of batteries (B1-B4) is equal to or greater than said first number i of batteries sufficient to allow enabling the actuation of the priority power user (102) and less than a second number k, greater than i, of batteries sufficient to allow enabling the actuation of the priority power user (102) and the secondary power user (101), the actuation of the priority power user (102) is authorized and the actuation of the secondary power user (101) is denied;
- as long as the number n of batteries (B1-B4) is greater than said first number i of batteries sufficient to allow enabling the actuation of the priority power user (102) and greater than the number k of batteries sufficient to allow enabling the actuation of the secondary power user (101), the actuation of the priority power user (102) and the secondary power user (101) is authorized.

### Kit

In accordance with the present disclosure, a kit is disclosed comprising a vehicle for gardening or agriculture (100) according to one or more of the aspects disclosed herein and at least one battery (B1-B4), optionally a plurality of batteries (B1-B4).

According to a further non-limiting aspect, the plurality of batteries (B1-B4) is configured and specifically intended to be subjected to a charge and/or discharge control by means of the control unit (10) in accordance with one or more of the aspects disclosed herein.

According to a further non-limiting aspect, at least part of the batteries of the plurality of batteries (B1-B4) is lithium.

### Use of the control unit

In accordance with the present disclosure, the use of the control unit (10) according to one or more of the aspects disclosed herein is further disclosed, for controlling a vehicle for gardening or agriculture (100), in particular for controlling a lawnmower tractor.

### Computer program

In accordance with the present disclosure, a computer program is also disclosed, comprising portions of software code; said computer program being configured to be executed by at least one control unit (10); said portions of software code causing, in use, the execution of one or more of the steps of the method according to one or more of the aspects disclosed herein.

### Figures

Some embodiments of that which forms an object of the present disclosure are disclosed below. The description refers to the appended figures, which relate to non-limiting embodiments; a brief disclosure of such figures is provided hereinbelow.
Figure 1 illustrates a schematic side view of a lawnmower tractor, which forms a gardening vehicle. The lawnmower tractor is provided with a control unit which manages the charging and discharging of the batteries installed therein.
Figure 2 illustrates a circuit diagram of the aforementioned control unit and batteries positioned on board the lawnmower tractor.
Figure 3 illustrates a circuit diagram of a discharge management module of one or more batteries; the discharge management module is part of the control unit.
Figure 4 illustrates a circuit diagram of a battery, in which the presence of a control line is highlighted which allows the activation of a solid-state switch for enabling charging the cells contained in the battery.
Figure 5 illustrates a brief flowchart of a control related to enabling the activation of one or more power users of the lawnmower tractor of figure 1.
Figure 6 illustrates a brief flowchart of a control related to a number of batteries needed to provide an activation of one or more power users.
Figure 7 illustrates a brief flowchart of a control related to a voltage and/or charge disparity control between two or more batteries.
Figure 8 illustrates a principle diagram of a charging circuit of a first battery and a second battery, in which there is a pair of bidirectional power switches.
Figure 9 illustrates a principle diagram of a discharging circuit, in which a first and a second battery supply a power user. Also in this case, there is a pair of bidirectional power switches.
Figures 10 to 14 illustrate possible circuit configurations which allow the aforesaid bidirectional power switch to be made.
Figure 15 illustrates in section a configuration of a casing housing an electronic board for controlling the batteries of a lawnmower tractor.
Figure 16 schematically illustrates a configuration of a lawnmower tractor according to the present disclosure.
Figure 17 illustrates a first non-limiting embodiment of a current switch circuit, comprising a unidirectional power switch.
Figure 18 illustrates second non-limiting embodiment of a current switch circuit, comprising a unidirectional power switch.
Figure 19 illustrates a circuit diagram of the aforementioned control unit and of batteries positioned on board the lawnmower tractor, in which there are unidirectional power switches.
Figure 20 illustrates a simplified diagram of a power switch circuit.
Figure 21 illustrates a time diagram of an electrical power absorbed by at least one power user, in which a control unit intervenes to cause a limitation of the maximum power deliverable by at least one battery connected to said at least one power user immediately when a maximum power value deliverable by said at least one battery is exceeded.
Figure 22 illustrates a time diagram of an electrical power absorbed by said at least one power user, in which the control unit intervenes to cause a limitation of the maximum power deliverable by at least one battery connected to said at least one power user only following a predefined time interval.

### Detailed description

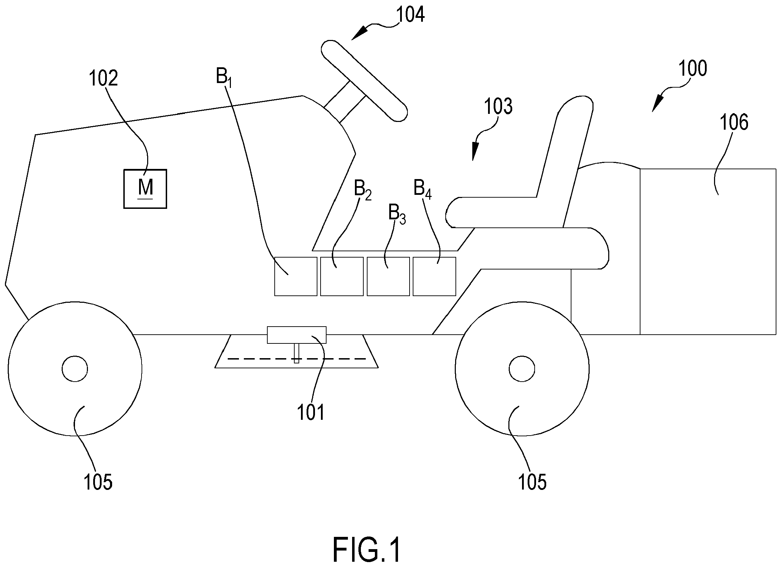

The present disclosure describes a management method for charging and discharging a plurality of batteries and a control unit for managing the charging and discharging of a plurality of batteries B1-B4. Such methods and control units are respectively applicable and adapted to be installed on a tool or vehicle for gardening or agriculture. The present disclosure, with specific reference to figure 1, illustrates a particular and non-limiting embodiment of the vehicle for gardening or agriculture: a lawnmower tractor. Other non-limiting examples of tools or vehicles for gardening or agriculture can be electro-actuated shears, mowers, tillers, sprayers, wheelbarrows, chainsaws, hedge trimmers, bio-grinders, blowers, aspirators, blade and turbine snowblowers, pressure washers, aerators, and scarifiers.

### Brief description of the vehicle for agriculture and gardening.

With specific reference to figure 1, the reference number 100 indicates a lawnmower tractor as a whole. The tractor 100 comprises at least one, and preferably a plurality of, mowing blades positioned at a mowing plate 101 positioned between the front wheels 105 and the rear wheels 105 of the tractor, below the chassis. The mowing plate 101 can be equivalently replaced, or combined, with a mowing bar provided with a plurality of mutually movable teeth. The mowing plate 101 can also be positioned cantilevered, at a front or rear part of the lawnmower tractor 100.

The mowing plate 101 can comprise one or more rotating blades, with common or independent control, which - preferably - rotate about a substantially vertical axis.

In place of the front and/or rear wheels, there can be tracks (e.g., made of rubber). In the embodiment shown in figure 1, an electric traction motor 102 generates traction torque for the drive wheels of the lawnmower tractor 100 (e.g., the rear wheels 105). In an embodiment of the present invention, the lawnmower tractor 100 can use what is known as drive-by-wire technology.

The traction motor 102 for driving the drive wheels is electrically connected to a plurality of batteries B1-B4 preferably housed below a driving seat 103, just as there is an electrical connection between the plurality of batteries B1-B4 and the electric motor for driving the blades of the mowing plate 101. The plurality of batteries B1-B4 can be removed from a respective seat, so that they can be replaced, for example at the end of the life cycle, or if there is a need to use such a battery to power another tool.

For the purposes of the present disclosure, the traction motor 102, which can be an electric motor or alternatively be replaced or coupled to an endothermic engine, partially electrically powered (by way of non-limiting example by means of a starter motor), represents a priority power user 102 for powering the lawnmower tractor by the batteries, since its function is to allow the movement thereof. Its supply is thus of major importance. As will be better clarified in the following portion of the disclosure, in fact, an embodiment of the control unit prefers, in particular in the event of limited power available from the batteries, the power supply of the priority power user 102. Also for the purposes of the present disclosure, the electronic control unit intended to control the aforesaid motor is in turn considered a priority power user. Such a control unit is in particular configured and specifically intended to determine at least one among a power supply, a powering down, and a power delivery, of said at least one traction motor.

In a non-limiting embodiment, the control unit is operatively connected to the joystick to allow independent control, in particular the delivery of an electrical power supplied to the first and the second electric motor, therefore to allow the user to adjust a speed or a rotation torque of the first and second drive wheel or track.

The mowing plate 101 represents a secondary power user. More in general, it can be said that the secondary power user comprises at least one motor or servo-actuator, installed on said tool or vehicle 100, configured and specifically intended to cause the execution of an operating activity of the tool or vehicle. Such an operating activity, in the specific case of the lawnmower tractor 100, consists of mowing the turfgrass. If the tool 100 were instead a bio-shredder, the operating activity can be shredding leaves; an electronic control unit controlling the bio-shredding motor represents the priority power user.

The electric motor coupled to the mowing plate 101 and the traction motor 102 coupled to the drive wheels are peculiar examples of power users of the lawnmower tractor 100. Further power users can be present and/or installed and/or selectively activated on the lawnmower tractor 100. Other possible users could be accessories compatible with the lawnmower tractor; these include rotating brushes or snowplough blades, which can for example be mounted frontally on the tractor itself.

In an embodiment of the present invention, a dedicated electric motor can be coupled to each of the drive wheels of the lawnmower tractor 100. In fact, in must be understood that the traction motor 102 could not be single; a first traction motor can in fact be configured to control the left traction wheel and a second traction motor can in fact be configured to control the right traction wheel. The first and the second traction motor can be independently controlled.

In a preferred non-limiting embodiment, the lawnmower tractor 100 comprises a steering organ, which in an embodiment comprises a command steering wheel 104 connected to the front wheels 105, so as to be able to steer left and right. Alternatively to the steering wheel, there can be braking levers of one or more of the tracks. Such a steering wheel or braking lever forms a steering device of the lawnmower tractor 100. Alternatively there can be a pair of hydraulic actuator control levers (in particular where the lawnmower tractor 100 has tracks), or a joystick for moving and braking the lawnmower tractor 100. This particular solution can be particularly useful where there is a need to control the first traction motor independently from the second traction motor.

In an embodiment, the lawnmower tractor 100 comprises a collection basket 106 of the cut grass. A conveyor transfers the cut grass from the mowing plate 101 to the collection basket 106. Preferably, the collection basket 106 is positioned in a rear portion of the lawnmower tractor 100.

The Applicant notes that a specific and non-limiting embodiment of the lawnmower tractor 100 object of the present disclosure comprises at least one compartment housing the aforesaid batteries B1-B4. In detail, the compartment can comprise a plurality of guides intended to direct the batteries, for example by means of a translation movement, in particular axial translation, to a predefined operating position.

In principle the compartment can be arranged in any position of the lawnmower tractor 100. However, it is preferable to position the compartment in such a position as to allow to optimize the stability of the lawnmower tractor. Such a position is in particular a central position between the front axle and the rear axle of the lawnmower tractor 100, and more in particular is a substantially barycentric position.

In a particular embodiment, the compartment is arranged substantially below the driving seat 103 or in a frame portion substantially interposed between the driving seat 103 and the steering wheel 104. Such an arrangement is a substantially barycentric arrangement on the lawnmower tractor 100, which allows to optimize the stability thereof. The batteries are easily removable by a user, for example with the simple opening of a door, without the need to disassemble parts of the lawnmower tractor, or more generally of the tool or vehicle, in order to access them.

### Hot swaps.

In a particular and non-limiting embodiment, the batteries B1-B4 can be removed or inserted "hot". This means that in an embodiment it is possible to extract, or insert, at least one of the batteries B1-B4 of the lawnmower tractor 100 without needing to have a complete powering down thereof, and/or (when charging) without needing to disconnect a power supply necessary for their charging. In particular, removing or inserting one or more batteries can be possible without needing to power down at least the secondary power user 101. The priority power user 102 will be kept electrically powered within the limits of the power deliverable by the connected battery (or, if multiple, by the connected batteries). By virtue of this aspect, the operating flexibility is increased.

In particular, the Applicant has conceived a particular embodiment of the control unit 10 which is configured to be operatively connected with at least one power user 101, 102 of the tool or vehicle 100, and with the plurality of batteries B1-B4, and in particular to be operatively connected with at least one among a first battery B1 and/or a second battery B2 forming part of the plurality of batteries B1-B4. Clearly the plurality of batteries, and in particular the first battery B1 and the second battery B2 are installed on board the tool or vehicle 100, and are intended to power, at least in part, said at least one power user 101, 102, by means of a power supply circuit, in particular by means of a power supply circuit configured to withstand the electric current absorbed by the at least one power user 101, 102.

The control unit 10 is configured to allow the connection or disconnection of at least one battery of the plurality of batteries B1-B4, in particular of one among the first battery B1 and the second battery B2, from the power supply circuit, without interrupting the electrical power supply provided to the at least one power user 101, 102. In particular, the control unit 10 is configured to allow the connection or disconnection of said at least one battery without interrupting the electrical power supplied to the priority power user 102 and to the secondary power user 101, in the latter case if possible in accordance with the availability of charge and/or power or electrical power deliverable by the batteries.

In particular, to avoid causing malfunctions or failures, the control unit 10 comprises a stage of filtering and/or limiting voltage and/or current peaks and/or drops, executing, in use, a filtering and/or limiting of voltage and/or current peaks and/or drops, upstream of the at least one power user 101, 102, in particular upstream of the power supply circuit of the power user 101, 102.

In a particular non-limiting embodiment, following the disconnection of a battery, the control unit 10 is configured to perform - through its own electrical circuits or in accordance with one or more software routines executed thereby - an automated electronic verification of whether at least one among an electrical power, charge, voltage or current, made available by the at least one battery connected to said power supply circuit is sufficient to power the at least one power user 101, 102, preferably the at least one among the priority power user 102 and the secondary power user 101.

The control unit 10 is then configured to perform, following said electronic verification, and in accordance with at least one value among an electrical power, charge, voltage or current, made available by the at least one battery residually connected to the power supply circuit, at least one among:
- an electronic limitation of a power which can be provided to the at least one power user 101, 102 and/or of power absorbable by the power user 101, 102, preferably an electronic limitation of the power which can be provided to the priority power user 102 and/or the secondary power user 101, and/or of power absorbable by the priority power user 102 and/or the secondary power user 101;
- the powering down of the secondary power user 101;
- a powering down of the priority power user 102,
optionally allowing an electrical power supply of at least itself, and of electrical control circuits of the priority 102 and/or secondary 101 power user.

### Battery technology.

In principle, the batteries B1-B4 can be made according to any technology. However, in a particular and non-limiting embodiment, the batteries are of the lithium type. This ensures significant compactness in relation to the overall capacity.

Preferably, but not limitedly, the batteries B1-B4 are of the same type, in particular they - each - have a same capacity (Ah) and/or a same voltage (V).

The batteries B1-B4 are connected in parallel and supply power to both the mowing plate 101 (by which in the present disclosure is meant the power supply of the electric motor(s) coupled to the payload, i.e., to the mowing plate 101) and the traction motor 102 (by which in the present disclosure is meant the power supply of the electric motor(s) coupled to the drive wheels). The mowing plate and the traction motor 102 therefore define power users (or loads) for the batteries B1-B4. The fact of having batteries B1-B4 in parallel implies that the voltage which is supplied to the power users is the voltage of each of the batteries B1-B4, while the total current deliverable to such power users is - ideally - the sum of the maximum currents that deliverable by each of the batteries B1-B4. The discharging of the batteries in parallel essentially determines a balanced discharging of all the batteries B1-B4 installed on board the lawnmower tractor 100.

In a preferred but non-limiting embodiment, each of the batteries B1-B4 is configured and specifically intended to provide a maximum voltage substantially between 20V and 50V, more preferably substantially between 22V and 48V. In an embodiment, the power users 101, 102 overall absorb a maximum power substantially equal to 100 A. This means that, having a total of four batteries B1-B4, each battery must be capable of delivering a maximum of 25 A.

Such batteries B1-B4 also power any other low-power utility with which the tool or vehicle for gardening or agriculture is equipped; for example, with specific reference to the lawnmower tractor 100 of the present disclosure, the batteries B1-B4 power an electrical panel 107 and/or the headlights and/or an ECU of the lawnmower tractor 100.

### Control unit.

The lawnmower tractor 100 disclosed herein is provided with a control unit - indicated by the reference number 10 - which is intended to control the charging and discharging of the batteries B1-B4.

The control unit 10 has a particular configuration of use which determines, in the use of the lawnmower tractor 100, the execution of a plurality of steps of a management method for charging and discharging the aforesaid batteries B1-B4 as well as controlling the modes with which the power users 101, 102 are electrically powered.

The present detailed disclosure will not always distinguish between the method and the configurations of use of the control unit 10; this, in order not to become excessively long. It is understood that where a particular configuration is specified for the control unit 10, such a configuration will clearly be equivalent to one or more corresponding steps of a management method for charging and/or discharging one or more batteries, and vice versa.

It is also to be understood that the control unit 10 disclosed herein can comprise various electronic data processing and/or programmable circuits, including a processor of the general purpose type, or an ASIC, or an FPGA, or a PLC, each of which can be programmed with a specific software program loaded onto an integrated memory or operatively accessible by the control unit 10. Such a software program can therefore comprise portions of code which when executed cause the execution of one or more of the steps of the method disclosed herein.

The control unit 10 can comprise several physical sub-portions, each positioned in a different position of the lawnmower tractor where this is convenient for reasons of production convenience, energy efficiency and/or safety.

The control unit 10 is specifically configured and intended to be in use interposed between the plurality of batteries B1-B4 and at least one power user 101, 102 of the tool or vehicle for gardening or agriculture.

### Charging operating configuration.

The control unit 10 firstly comprises a charging operating configuration. In the charging operating configuration, the control unit 10:
- selects at least a first part B1 of the plurality of batteries B1-B4, enabling the charge thereof;
- causing a selective charging, by a power supply 30 of the first part B1 of the previously selected plurality of batteries B1-B4.

Subsequently, in the charging operating configuration, the control unit 10 selects a second part B2-B4 of the plurality of batteries, enabling the charge thereof, and causes a selective charging, by the power supply 30, of the second part B2-B4 of the plurality of batteries B1-B4.

More specifically, in a first embodiment the first part B1 of the plurality of batteries is a single battery. This means that while the charging of the batteries B1-B4 occurs on one battery at a time, or, for example, in groups of two, in the discharge process following the power supply of the power users 101, 102, all the batteries of the aforementioned plurality compete together. The control unit 10 is therefore configured to execute a sequential charging of each of the batteries forming said plurality of batteries B1-B4.

In an embodiment, the control unit 10 is configured and specifically intended to cause a charge of each battery of the plurality of batteries B1-B4 with CCCV mode (constant current, constant voltage). At the beginning of its charge (i.e., starting from a nearly discharged battery configuration), each battery is charged with a constant current, the value of which is established by the control unit. A threshold voltage value is stored in a memory of the control unit 10, or in a memory operatively accessible thereby; when such a threshold voltage value is exceeded, a progressive reduction of the charging current of the battery is determined, up to substantially an ideal value of zero, which substantially corresponds to a full charge.

In an embodiment, in which the control unit 10 selects one battery at a time, among the plurality of batteries B1-B4, the total charging time T_{ch} necessary to charge all the N batteries of the plurality of batteries is given by T_{ch} =N*T_{b}, where T_{b} is the time necessary to charge a battery.

At least one battery of said plurality of batteries B1-B4 can be removed without compromising the operation of the tool or vehicle 100; such a battery, when removed (and charged) can be favourably used for further purposes, e.g., in further tools or vehicles 100. It is therefore clear that the tool or vehicle 100 can act as a power supply for batteries also intended for other tools or vehicles.

### Power supply operating configuration.

The control unit 10 further comprises a power supply operating configuration. In the power supply operating configuration, the control unit 10 causes a power supply of the at least one power user 101, 102 of the tool or vehicle 100, determining, in use, a transfer of electrical energy simultaneously occurring from the plurality of batteries B1-B4 to the at least one power user 101, 102.

This means that when "seen" by the at least one power user 101, 102, the batteries appear connected in parallel. Their overall voltage is therefore, at least ideally, equal to the voltage of each of the batteries of the plurality of batteries B1-B4. The deliverable current is the sum of the currents deliverable by each of the batteries of the plurality of batteries B1-B4. The total electrical power deliverable by the plurality of batteries is given by the sum of the electrical powers deliverable by each of the batteries of the plurality of batteries.

In use, the control unit 10 is configured to operate the power supply operating configuration only when all of the batteries of the plurality of batteries B1-B4, when technically chargeable (see subsequent portions of the disclosure), have been charged.

For this reason, the control unit 10 comprises a plurality of discharge modules 11. Each discharge module 11 comprises a respective discharge diode.

As will be better disclosed below, in an embodiment each discharge module comprises a diagnosis module 11d.

The number of discharge modules 11 is equal to the number of batteries of the plurality of batteries B1-B4. Each discharge module 11 is operatively connected with the power users 101, 102 by means of a vehicle management system 20, which comprises at least one power switch 20s of controlled type. The control unit 10 is connected to the vehicle management system 20 by means of a connector schematically depicted by the double arrow 16.

In use, through a control exerted by the control unit 10 and by means of the plurality of discharge modules 11, in at least one particular power supply operating configuration, the discharge of the batteries B1-B4 therefore occurs in a balanced manner. Therefore, in such a particular power supply operating configuration, all the batteries of the plurality of batteries B1-B4 contribute to powering the power users 101, 102.

The control unit 10 further comprises a charge module operatively and in particular electrically associated with each battery of the plurality of batteries B1-B4.

### Description of the power supply for charging the batteries.

The control unit 10 further comprises a power supply input, which is configured to provide electrical power necessary for charging the plurality of batteries B1-B4. In particular, the power supply input is connected (by means of a connector, schematically depicted by the double arrow 16, and therefore removably) to a power supply 30 configured and specifically designed to receive a single-phase alternating voltage in input, for example an alternating voltage at 220V or 240V or 115V, preferably of the sinusoidal type, typical of domestic power supplies. Alternatively, the power supply 30 is configured and specifically intended to receive an alternating three-phase voltage in input, for example at 380V.

Still alternatively, the power supply 30 can be configured to select the single-phase or three-phase power supply, also automatically. Suitable electronic circuits, not described in detail, will be present to allow the aforesaid automatic selection.

The power supply 30 further comprises a voltage converter which converts the alternating voltage into direct voltage, and thus makes a conversion stage from alternating voltage to direct voltage. Typically, the power supply 30 further comprises a transformer, used with a voltage lowering function.

The power supply 30 can conveniently be provided with electrical protection circuits, of known type and therefore not described in detail.

It is noted in particular that the power supply 30 is disconnectable from the plurality of batteries B1-B4 and the control unit 10, and therefore also from the lawnmower tractor 100. In order to keep the power supply 30 as inexpensive as possible, and universally applicable for a large variety of applications or tools, the intelligence of the power supply 30 is limited to the minimum possible.

In the event of a sudden disconnection and/or reconnection of the power supply 30 with the control unit 10, in particular when charging the batteries B1-B4, it is noted that the already accumulated charge is not lost, and the control unit 10 is conveniently configured to prevent damage to the batteries B1-B4, in particular to filter out any voltage surges which may occur.

In a preferred, but non-limiting embodiment, the connection of the power supply 30, and in particular the supply of electrical power to at least one of the batteries of the plurality of batteries B1-B4, determines an electrical disconnection of the at least one power user 101, 102. Such a disconnection, in an embodiment, determines an opening of the power switch 20s of the vehicle management system 20.

### Inputs and control lines for the batteries.

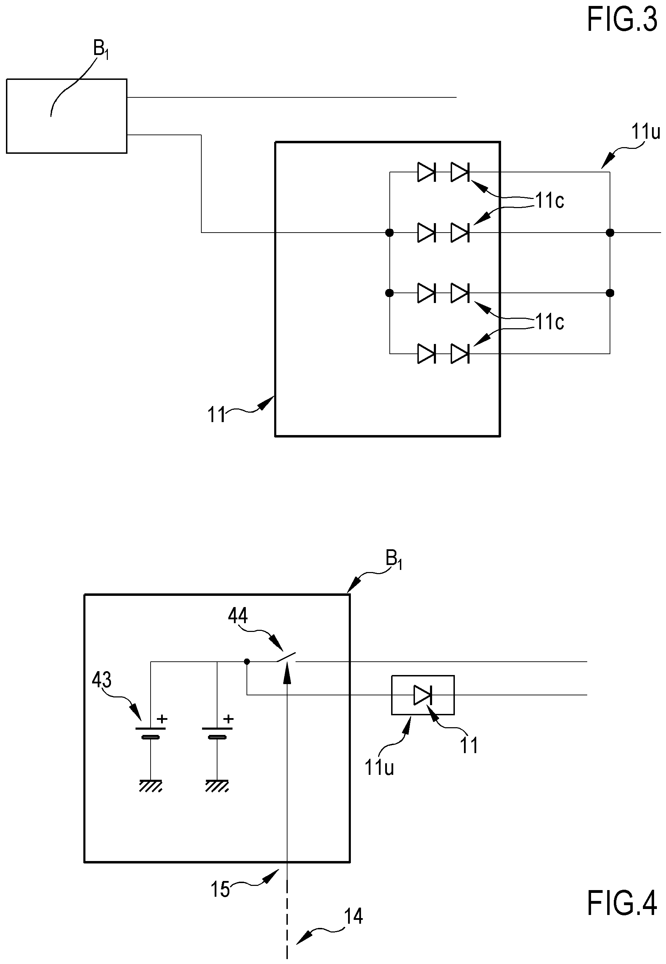

As illustrated in particular in figure 4, in an embodiment, each battery B1-B4 is a smart battery, and has a control input 15 powered by a control line 14, on which a battery charge enabling signal is selectively transmitted. The number of control lines 14 is equal to the number of batteries of the plurality of batteries B1-B4. The control input, when an appropriate signal is received, causes a switching of a supply switch 44, preferably a solid-state supply switch 44, which determines the possibility of charging the cells 43 contained in the battery. Vice versa, when such an appropriate signal is not received, it is not possible to proceed with a charging of the cells 43, since such a supply switch 44 is kept open.

For the purposes of the present disclosure, an appropriate signal is to be understood as any type of signal capable of determining a switching of the aforesaid switch; in an embodiment such a signal is simply a signal with a non-zero voltage; in a further embodiment such a signal is a signal provided with an appropriate binary coding.

At the level of the communication protocol for controlling the batteries, any protocol is in principle usable; however, in a non-limiting embodiment, the communication protocol employed by the control unit 10 for the dialogue with the vehicle control system 20 is of the CANOPEN type. The use of this specific communication protocol is not to be construed as limiting, as in an embodiment other known automation protocols can be provided for the purpose of enabling communication between the control unit and the vehicle control system.

By virtue of this technical feature it is possible to use, for charging the plurality of batteries B1-B4, a substantially generic power supply 30, which could also be advantageously used for further charging operations of batteries not associated with the lawnmower tractor 100.

It is noted that in a preferred but non-limiting embodiment, a 1-wire type bus system is used for controlling the plurality of batteries B1-B4 by the control unit 10. Such a protocol exploits a control line 14 for each battery B1-B4 and allows the transmission of data on a single wire with a binary coding.

In particular in which the "0s" are transmitted carrying a 0V bus line signal, or in any case at a low voltage value for a first time interval (preferably, but not limited to, 60µs), while the "1s" are transmitted with a 0V bus line signal, or in any case at a low voltage level, for a second time interval, lower with respect to the first time interval (preferably, but not limitedly, 15ps).

The control unit 10 is configured to maintain a substantial complete independence for charging each battery. The assembly formed by the plurality of batteries B1-B4, each of intelligent type and provided with its own charge management system, and by the control unit 10 determines in fact the presence of a plurality of charging sub-modules; if one of the sub-modules should fail, the charging of the battery associated with the aforesaid sub-module would be compromised, but the charging of the remaining batteries of the plurality of batteries B1-B4, would instead not be compromised.

### Management of the power available from the batteries.

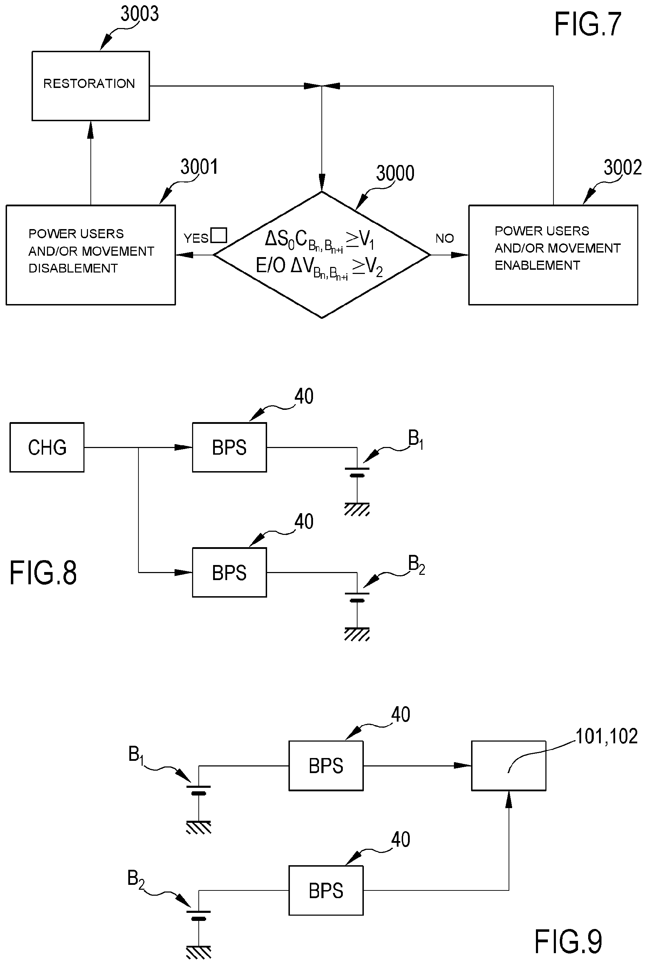

Figure 7 illustrates a block diagram regarding a specific power management functionality available on the batteries, implemented through the control unit 10. The Applicant has noted that the possibility of effectively and sufficiently lastingly actuating the power users 101, 102 also depends on the number of batteries present on board the lawnmower tractor 100.

In fact, in an embodiment, said M the maximum number of batteries installable on board the lawnmower tractor 100 (in the case of the present detailed description,M=4), the lawnmower tractor 100 could also operate with a lower number of batteries with respect to the maximum, albeit with some limitations.

The following is herein defined:
- i: minimum number of batteries necessary to allow the activation of the traction motor 102;
- k: minimum number of batteries necessary to allow the activation of the mowing plate 101;
- n: number of batteries actually installed on board the lawnmower tractor 100.

In an embodiment, k>i. In fact, also for safety reasons, the possibility of maintaining a movement of the lawnmower tractor 100 is privileged with respect to the possibility of (also) keeping the mowing plate 101 active.

As can be clearly seen from the diagram of figure 7, the control unit 10 is configured to perform a control of the number of batteries B1-B4 present on the lawnmower tractor 100, and to electronically determine the possibility of actuating at least one priority power user among the plurality of power users, or of one priority power user and one secondary power user among the plurality of power users 101, 102, as a function of a number of batteries B1-B4 installed on board the lawnmower tractor.

The block 2001 identifies a control step to check if the number n of batteries B1-B4 is less than i (n<i). If so, neither the traction motor 102 (priority power user) nor the mowing plate 101 can be actuated. The possibility of electrically powering the movement of the tractor (block 2005) and the mowing plate (block 2006), therefore both the priority power user and the secondary power user, is then disabled.

If no, it means that the number n of batteries B1-B4 installed on board is greater than i, and therefore at least the priority power user 102 (traction motor 102) is enabled. Such a step is schematically depicted by block 2002.

Subsequently (block 2003), a step of verifying whether the number n of batteries B1-B4 installed on board the lawnmower tractor 100 is less than k (n<k) is carried out. If so, it means that the number n of batteries is still not sufficient to allow the actuation of the secondary power user (mowing plate 101). For this reason, the priority power user (traction motor 102) continues to be kept enabled but the secondary power user is kept disabled. If no, the secondary power user is also enabled (block 2004).

For example, in the specific embodiment of the present disclosure, for example, the following conditions i=2; k=3 can apply. This means that with one battery, the lawnmower tractor 100 does not move, nor can it mow; with two batteries the lawnmower tractor 100 moves but cannot mow; with three batteries the lawnmower tractor 100 moves and can mow.

This particular technical feature is well combined with the possibility of performing a previously mentioned "hot" extraction and insertion, since it allows at least the priority power user 102 to keep functioning even if the user extracts the last battery necessary to also maintain the operation of the secondary power user.

With regard to this technical aspect, the Applicant has devised an embodiment of the control unit 10 which is configured to determine a powering down or an electrical power supply of the secondary power user 101, in particular leaving the supply of the priority power user 102 unchanged and a priority, in accordance with at least one value among an electrical power, charge, voltage or current, made available by the at least one battery connected to the power supply circuit.

### Overload protection of the power supply.

The control unit 10 is also configured to allow the power users 101, 102 to operate only when the power supply 30 is disconnected, i.e., only when none of the batteries B1-B4 is in the charging step. This means that as long as the power supply 30 is connected to the control unit 10 and electrical power is absorbed by it, the power supply operating configuration cannot occur.

By virtue of this aspect, the power supply 30 is preserved from overloads; in fact, the current which the power supply 30 is capable of delivering is much lower with respect to the correct one absorbed in use by even one of the power users. Furthermore, the actuation of the power users is only made possible when a consent is provided through a contact key 42.

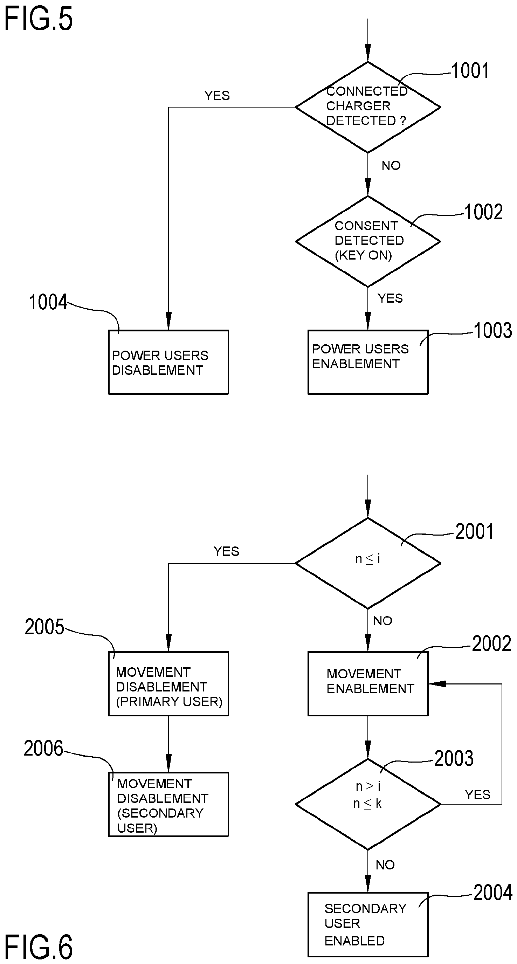

The flowchart of figure 5 illustrates the control performed by the control unit 10. The block 1001 identifies a step of detecting the presence of connection of the power supply 30. If the power supply 30 is connected, the possibility of actuating the power users 101, 102 is disabled (block 1004). When the power supply 30 is disconnected, the possibility of actuating the power users is enabled, in particular when consent is given by the contact key 42 (for example: contact key in ON). Therefore, the control unit 10 verifies whether a consent is given by the contact key 42 (block 1002) and if so, proceeds with enabling the power users 101, 102. This means that, in use, the presence or absence of the power supply 30 in operating connection is a priority with respect to the consent given by the contact key 42.

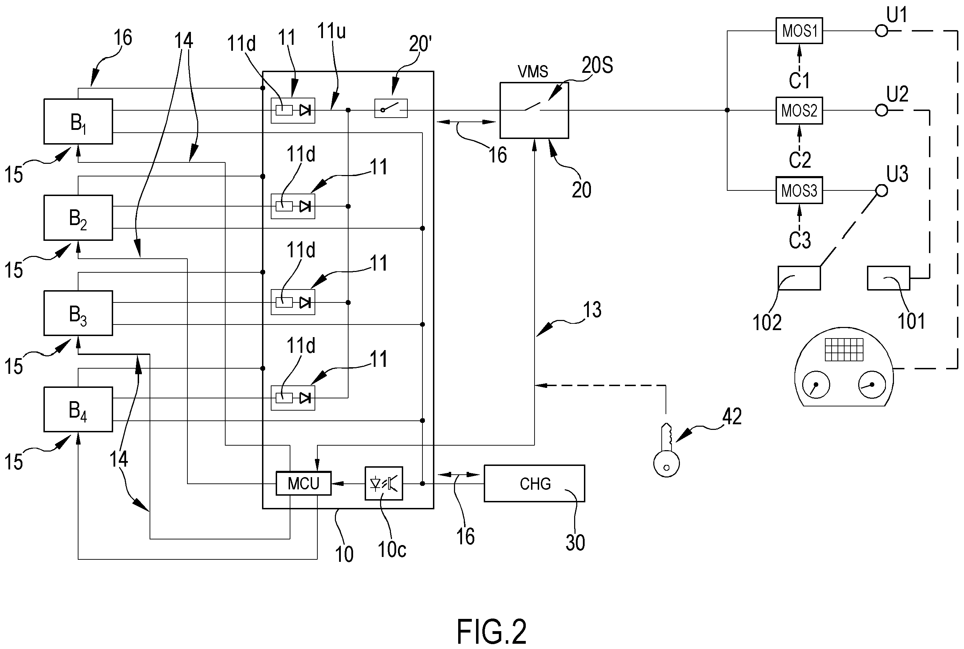

From a structural point of view, as shown in figure 2, the control unit 10 comprises at least one coupling sensor 10c, which is configured and specifically intended to allow to detect when the power supply 30 is operatively connected with the batteries B1-B4. In a non-limiting embodiment, such a coupling sensor 10c comprises an optocoupler. Alternatively, the coupling sensor 10c can comprise a power sensor configured to detect whether electrical power is transferred to at least part of the batteries B1-B4.

As can be seen from figure 2 the control unit 10 further comprises a power switch 20s, preferably solid-state, positioned in the vehicle management system 20. The power switch 20s is normally closed, so that the electrical energy from the batteries B1-B4 can be supplied to the power users 101, 102 through the output 20u of the vehicle management system 20. The power switch 20s switches to the open configuration, interrupting the power supply of the power users 101, 102, only when the coupling sensor 10c detects the presence of the connection of the power supply 30. A control signal is transmitted from the coupling sensor 10c to the power switch 20s with a control line 13c. As can be seen from figure 2, therefore the control of the power switch 20s is determined by the contact key 42. A control line 13 controls the opening and/or closing of the power switch 20s and is operatively connected to the charge management module (MCU).

### Discharge management module.

Figure 3 illustrates a discharge management module 11 for a battery B1 in detail. As can be seen in the figure, the discharge management module comprises an input powered by the battery cells (in figure 3, the battery B1) and an output 11u.

Such a module comprises a plurality of diodes 11c therein whose cathode is connected, in particular directly connected, to the input powered by the battery cells, and whose anode is connected to the output 11u. The plurality of diodes 11c is placed in parallel. The function of the diodes is to prevent an undue supply of electrical energy to the cells 43 of the battery B1 through current returns from the output 11u, i.e., to prevent a supply of an electrical current moving from the cathode to the anode of the diode (the cathode of the diode is directly connected to the output 11u).

In an embodiment the discharge management module 11 comprises a plurality of parallel branches, each of which houses at least one diode 11c. In a preferred embodiment, at least one of said parallel branches, and more preferably all of the parallel branches, have a pair of diodes placed in series. This particular configuration makes it possible to extract very high discharge currents in an energy-efficient manner and, at the same time, prevents the breakage of a diode, with consequent significant reverse current flow, from compromising the current flow function (not negligible) to the cells 43 of the battery B1. In such a case, there would still be the second of the diodes in series to prevent the problem. The joint event of a breakage of two diodes in series on the same branch, determining the loss of the supply impediment function of a non-negligible reverse current to the cells 43, is very low. In fact, it is observed that a breakage of two or more diodes, as long as not in series, on several branches, does not cause a loss of the supply impediment function of a non-negligible reverse current to the cells 43.

The diodes 11c can all be of the same type, or of different types.

The Applicant in particular observes that the presence of the diodes 11c prevents that in the power supply operating configuration, in which the batteries B1-B4 operate by supplying current in a parallel configuration, part of the current supplied by one battery can inadvertently end up in another battery of the plurality of batteries B1-B4, damaging it.

In a preferred but non-limiting embodiment, an auxiliary power switch 20' (supply switch) is arranged in series at the output 11u. Such an auxiliary power switch 20' is part of the control unit and is connected in series to the power switch 20s of the vehicle management system 20.

### Architecture of an advantageous embodiment of the lawnmower tractor.

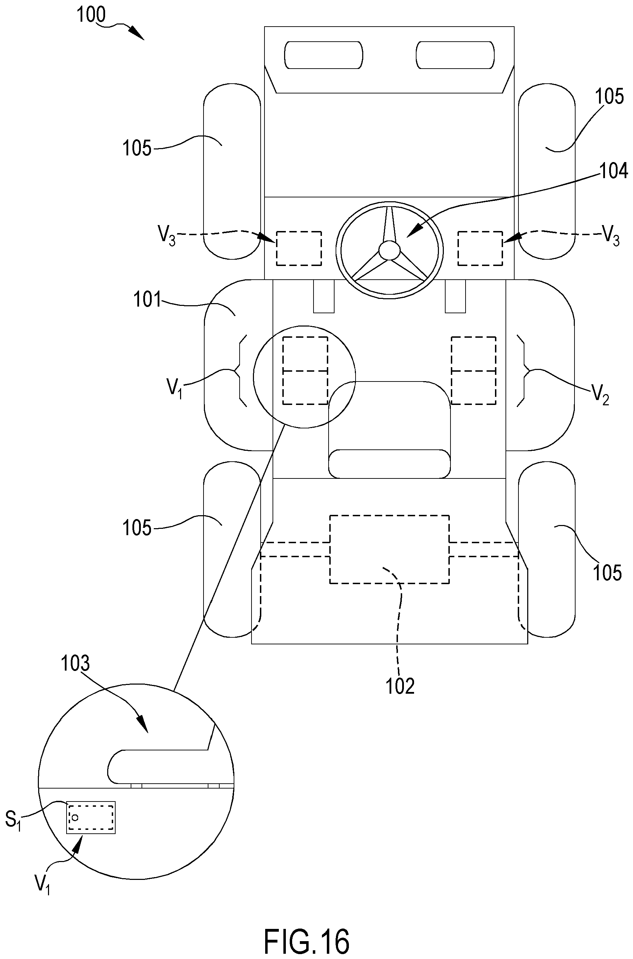

Figure 16 schematically depicts a particularly advantageous embodiment of a lawnmower tractor 100 according to the present invention, which is optimal both with regard to the convenience of use and maintenance of the lawnmower tractor, and with regard to the stability of the lawnmower tractor.

In such an embodiment, the lawnmower tractor comprises, near the driving seat 103, a pair of compartments V1, V2 for housing the batteries B1-B4 (advantageously lithium or lithium-ion) and a further compartment V3 for housing the casing 28 with the electronic board 77 for controlling the batteries. The compartments V1-V3 can advantageously be provided with cooling fans. Thereby, the weight of the batteries B1-B4 in particular is unloaded to the ground in a balanced manner between the wheels of the lawnmower tractor and does not cause an excessive displacement of the centre of gravity to the rear.

The compartments V1, V2 are positioned symmetrically with respect to the central plane of symmetry of the lawnmower tractor, so that the centre of gravity of the batteries B1-B4 is positioned at the plane of symmetry, benefiting the stability of the lawnmower tractor 100. To this end, the compartments V1, V2 are positioned below, so as to bring the centre of gravity of the lawnmower tractor 100 closer to the ground, further benefiting the stability of the lawnmower tractor 100, in particular when the advancement of the lawnmower tractor 100 occurs over steep terrain.

The compartment V1 comprises a chamber which is accessible (particularly for executing operations such as battery insertion, extraction, and replacement) through the outer side surface, which, under conditions of use of the lawnmower tractor 100, is kept closed by a door S1 adapted to prevent unwanted access to the compartment V1, as well as to protect the batteries from intrusions of water, mud, and cut grass (the door S1 instead having appropriate ventilation slits, outside air is not precluded from reaching the batteries for their cooling, passing through the door S1). The door S1 can be of the detachable or slidable or rotatable type. In an embodiment, the door S1 is pivoted at its lower side. In order to arrange a battery in its seat inside the compartment V1, the user first opens the door S1, then inserts the battery in the compartment V1 until the mechanical and electrical connections are established (advantageously, the insertion of the battery can be facilitated by guide means for this purpose set up in the compartment V1) and finally returns the door S1 to the closing position.

As disclosed herein in relation to the first compartment V1, it is to be understood that it is also applicable to the second compartment V2 which is therefore accessible through the respective outer side surface (kept closed by a door S2 in conditions of use of the lawnmower tractor 100).

The first and the second compartment V1, V2, are the compartments from which the batteries, in particular the first battery B1 and the second battery B2 of the plurality of batteries B1-B4, can be introduced or extracted to perform the aforesaid "hot" extraction or insertion.

The compartment V3 can be arranged near the steering wheel 104 and/or a control console of the lawnmower tractor 100, for example it can be positioned to the left or to the right of the steering wheel 104 or in any case frontally with respect to the seat 103. This embodiment is depicted in figure 16. Alternatively, the compartment V3 can for example be arranged in a position below the driving seat 103 and can be accessible, for technical assistance interventions on the electronic board 77, for example by overturning or disassembling the driving seat 103. The compartment V3 comprises means for fastening the casing 28.

It should be noted that the configuration of the lawnmower tractor 100 disclosed herein has in itself inventive contents, independent (albeit synergistic) with respect to the inventive contents related to the configuration of the control unit 10 of the lawnmower tractor 100.

### Battery temperature control.

The present disclosure illustrates the possibility of controlling the temperature of at least part of the plurality of batteries B1-B4, mainly so as to prevent the heating thereof above critical temperatures.

Preferably, but not limitedly, the compartment houses at least one fan intended to cause a cooling of the batteries B1-B4. However, in an embodiment, the compartment houses a number of fans equal to the number of batteries B1-B4. Where multiple compartments are present, each compartment of the plurality of compartments V1-V3 will preferably comprise a respective fan.

The fans are electrically powered fans, powered by an operationally coupled electric motor.

The control unit 10 is operatively connected, in particular electrically connected, with the at least one fan. When multiple fans are present, preferably the control unit 10 is connected with said fans with a particular operating configuration intended to allow the selective control of an activation and deactivation of each fan independently of the others. Such a connection can in particular entail a presence of a plurality of power supply lines of the aforesaid fans, each operatively connected with a respective fan.

In a preferred but non-limiting embodiment, the control unit 10 implements a control of a rotation speed of the fan, so as to obtain an adjustable cooling of the respective battery. The control of the rotation speed can occur independently for each fan or simultaneously for all fans. Therefore, in an embodiment, the electric motor of the fans is controllable in rotation speed, for example (and not limitedly) by means of a PWM type control or equivalent.

In a preferred but non-limiting embodiment, each of the batteries B1-B4 is provided with a temperature sensor configured to detect the temperature of the cells 43. The control unit 10 is configured to receive a temperature signal transmitted by said temperature sensor; the temperature signal is indicative of a temperature t (°C) of a given battery. The control unit 10 is further configured to activate one or more of the fans when the temperature signal transmitted by one or more of the temperature sensors indicates that the respective battery has reached (or exceeded) a temperature t which is higher with respect to a threshold temperature t_{TH}.

In a preferred, but non-limiting embodiment, the control unit 10 is configured to select, preferably automatically, the activation of all the fans even if only one of the sensors detects a temperature t which is higher with respect to the threshold temperature tTH.

Alternatively, the temperature sensors can be present at the at least one compartment V1-V3, and therefore not be installed on board the batteries. Also in such a case, the control implemented through the control unit 10 does not change. The absence of temperature sensors on board the batteries contributes to limiting the production cost thereof.

The Applicant further notes that in an embodiment the batteries are provided with contacts configured to come into contact with respective sockets when the batteries are properly housed in the compartment in an operating position. More precisely, the batteries B1-B4 can be inserted into the at least one compartment V1-V3 by means of translation to an end-stroke position at which the contacts are in contact with the sockets, and electrical energy can be transferred to and from the batteries B1-B4.

### Battery voltage control and imbalance management.

In a preferred but non-limiting embodiment, each battery B1-B4 is provided with a voltage sensor operatively connected to the control unit 10. Alternatively, the control unit 10 comprises a plurality of voltage sensors, each operatively connected to a respective battery B1-B4. Still alternatively, the control unit 10 comprises a single voltage sensor, and is configured to operatively couple the single voltage sensor first with the first battery B1, subsequently with the second battery B2, and gradually up to the last battery B4 of the plurality of batteries B1-B4.

The control unit 10 is configured to electronically compare the voltage value detected on at least one specific battery B1-B4 with a minimum voltage threshold value Vₘᵢₙ. The minimum voltage threshold value Vₘᵢₙ is indicative of the minimum voltage which the battery can have to be able to be charged. If the voltage detected by the voltage sensor is below the minimum voltage threshold value, the battery cannot be charged, and is considered to be faulty, and is therefore excluded from being able to provide a power supply to the power users. This means that in this case the switch 44 of the battery in question, by means of the control line 14, is placed in an open configuration, preventing the passage of electric current.

Preferably, the control unit 10 is configured to execute the aforesaid electronic comparison before the start of charging of each battery.

In fact, the Applicant has found that certain batteries, in particular if lithium or lead-acid, if discharged below a certain voltage value, can be subject to unwanted chemical reactions which determine a significant reduction in the capacity of the battery in subsequent charges. In particular, lithium batteries which are brought below a certain voltage can become chemically unstable with subsequent charges, creating the risk of short circuits in the respective cells. Therefore, the control procedure implemented by means of the control unit 10 allows to increase the safety of charging and use, including the subsequent discharge, of the batteries B1-B4.

To allow this, the control unit 10 comprises a plurality of diagnostic modules 11d, configured to diagnose the operation of a respective battery during the discharge step (i.e., in the power supply configuration). The number of diagnosis modules 11d is equal to the number of batteries of the plurality of batteries B1-B4. Figure 2 depicts four diagnosis modules 11d having four batteries. Each of the diagnosis modules 11d is arranged upstream of a respective discharge diode; the output of the diagnosis module 11d supplies the anode of the discharge diode. The diagnosis modules 11d can integrate voltage and/or current sensors.

Conversely, the diagnostics during the battery charging operating configuration is managed through a diagnostic battery charge module (reference 14 in the figure). Through the battery charging diagnostic module, the control unit 10 can also be configured to stop charging the battery, and therefore switch to charging the next battery in the plurality of batteries B1-B4, when said battery assumes a voltage value at least equal to a predetermined value Vₘₐₓ.

Alternatively or in addition to what is disclosed above, the control unit 10 can be configured to execute an electronic control of the charging current supplied to each of the batteries of the plurality of batteries B1-B4. In particular, when the charging step of a battery, or of a part of the plurality of batteries B1-B4, is performed by means of a current sensor, a check is performed as to whether the charging current:
- exceeds a given maximum safety value Iₘₐₓ, and/or
- falls below a minimum charging current value Iₘᵢₙ.

The maximum safety value Iₘₐₓ is determined so as to indicate a value above which a failure of the battery is to be understood, or of the part of the plurality of batteries concerned, determining for example a faux-short circuit condition.

The minimum charging current value Iₘᵢₙ is determined so as to indicate a value below which it is to be understood that the battery is almost fully charged. Such a minimum charging current value can conveniently be associated with a self-absorption value of the battery.

When one of the above two conditions occurs, i.e., when the charging current exceeds the given maximum safety value Iₘₐₓ or falls below the minimum charging current value Iₘᵢₙ, the charging step of the battery, or part of the plurality of batteries B1-B4, is interrupted; it may be possible to move to a subsequent charging step of another battery or another plurality of batteries B1-B4.

Preferably, but not limitedly, if the charging current exceeds the determined maximum safety value Iₘₐₓ, the battery charging step is interrupted immediately.

In an embodiment, if the charging current falls below the minimum charging current value Iₘᵢₙ, the charging step of the battery, or part of the plurality of batteries B1-B4, is interrupted; it may possibly pass to a subsequent charging step of another battery or another plurality of batteries B1-B4.

Alternatively, in order not to stop the (complete) charging too soon, before stopping the charging step of the battery, or part of the plurality of batteries B1-B4, when the charging current falls below the minimum charging current value Iₘᵢₙ, a time equal to or more than a certain waiting time Tw is waited. If the charging current, within the waiting time Tw, continues to be below the minimum charging current value Iₘᵢₙ, the charging step of the battery, or of the plurality of batteries B1-B4, ends; it may possibly pass to a subsequent charging step of another battery or of another plurality of batteries B1-B4.

Preferably, but not limitedly, the control unit 10, by means of the diagnostic battery charging module, is configured to read (for example cyclically, at predetermined time intervals) the voltage value of a battery or of the plurality of batteries B1-B4, both in the charging operating configuration and in the power supply operating configuration. In particular, reading the voltage of at least one battery among the batteries of the plurality of batteries B1-B4 allows to compare the voltage with the threshold voltage value as a result of which the charging current of the battery is progressively reduced.

Referring to the block diagram of figure 7, in an embodiment the control unit 10 is configured and specifically adapted to execute a voltage difference verification procedure between two or more batteries of the plurality of batteries B1-B4.

Block 3000 identifies a step of verifying voltage and/or charge level imbalances between two batteries Bn and Bn+i. The voltage imbalance between two batteries Bn and Bn+i is indicated by Δ*V*(*Bₙ, B*_{*n*+*i*})*.*

The charge level imbalance between two batteries Bn and Bn+i is indicated by Δ*SoC*(*Bₙ, Bₙ₊ᵢ).*

In the step of verifying voltage and/or charge level imbalances, a comparison is made between the charge level Δ*SoC*(*Bₙ, B*_{*n*+*i*}) between two batteries Bn and Bn+i and a first value Vv1 and/or a comparison is made between the voltage imbalance Δ*V*(*Bₙ, B*_{*n*+*i*}) between two batteries Bn and Bn+i and a second value Vv2.

In particular, the step of verifying voltage imbalances includes verifying if the charge level imbalance Δ*SoC*(*Bₙ, B*_{*n*+*i*}) between two batteries Bn and Bn+i is greater than or equal to a first value Vv1, and/or if the voltage imbalance Δ*V*(*Bₙ, B*_{*n*+*i*}) between two batteries Bn and Bn+i is greater than or equal to a second value Vv2.

Clearly, the above comparison is an electronic comparison.

If so (output S, block 3000), for safety reasons, the power users are disabled and/or the movement of the vehicle 100 is disabled.

If not (output N, block 3000), the power users and/or the movement of the vehicle 100 are enabled (or their enabling is maintained). Such enabling or maintenance of the enabling is depicted with block 3002 of figure 7.

As can be seen from the diagram of figure 7, after enabling (or maintaining the enabling), the step of verifying voltage and/or charge level imbalances is executed again. It is a loop control cycle, which advantageously allows to have an immediate control of any failures on the batteries.

The block diagram of figure 7 illustrates a "recovery" block (block 3003). Such a block corresponds to a recovery step in which an operator executes a replacement of a battery and/or verifies any malfunctions of the electronics of the tool or vehicle 100. The recovery step can comprise sending a consent command "C" to be able to proceed again with a new step of verifying voltage and/or charge level imbalances between two batteries Bn and Bn+i. It is understood that the aforesaid step of verifying voltage and/or charge level imbalances between two batteries Bn and Bn+i is performed for every n other than i until all the combinations of batteries of the plurality of batteries B1-B4 are completed.

### Limitation of deliverable power.

In a specific embodiment, the control unit 10 is configured and specifically intended to cause a selection and/or a limitation of a maximum electrical power deliverable by each battery of the plurality of batteries B1-B4. The selection and/or limitation mentioned above are respectively a selection and/or limitation of an electronic type. In particular the control unit 10 is configured to execute a particular procedure whereby selectively, and independently, for at least one battery, and optionally for each battery, of the plurality of batteries B1-B4, a maximum electrical power deliverable by the at least one battery is selected electronically, and optionally by each battery and/or the maximum electrical power deliverable by at least one battery is electronically limited, and optionally by each battery of the plurality of batteries B1-B4. To execute the above, the control unit 10 transmits a power management signal to an electronic control device of the electrical power deliverable by the battery (e.g., solid-state switch) of at least one battery selected among the batteries of the plurality of batteries B1-B4, or if applicable a part or even all of the batteries of the plurality of batteries B1-B4.

In a particular embodiment, the limitation of the maximum electrical power deliverable comprises, and in particular is, a limitation of the current which the battery, or which part of the plurality of batteries B1-B4, or which the entire plurality of batteries B1-B4, can deliver.

This peculiar technical feature allows to avoid overloading phenomena for particular types of batteries, and also allows to use batteries of a significantly different type together without risks. In particular, this peculiar technical feature allows to supply the at least one power user 101, 102 with a plurality of batteries B1-B4 in parallel even if one of the batteries of said plurality is capable of supplying a greater electrical current with respect to that deliverable by one or more of the other batteries of said plurality of batteries B1-B4.

In particular, the control unit 10 can be configured to prevent, in the power supply operating configuration, the discharge of a given battery of the plurality of batteries B1-B4 (e.g., of the first battery B1) from determining the charging of a given further battery of the plurality of batteries B1-B4 (e.g., of the second battery B2).

This system is particularly advantageous especially where the batteries B1-B4 are used to power a vehicle 100 which during braking can transform the motor into an electric generator capable of at least partially charging at least one battery (for example and not limitedly, the less charged battery) of the plurality of batteries B1-B4.

So as to envisage an effective control of the maximum power deliverable by each battery of the plurality of batteries B1-B4 and also so as to determine the possibility of charging at least one battery of the plurality of batteries B1-B4 when the vehicle motor 100 is transformed into a motor, it is preferable that there is a continuous monitoring of the voltage and/or current of each of the batteries.

In general, therefore, it can be stated that the present disclosure illustrates a specific embodiment of the control unit 10 which is configured to store at least one datum related to a maximum electrical power deliverable by at least one among the first battery B1 and the second battery B2.

More in particular, the control unit 10 is configured to store a first datum related to the maximum power deliverable by the first battery B1 and to store a second datum related to the maximum power deliverable by the second battery B2.

The control unit 10, alternatively or in combination, is configured to electronically find the datum related to a maximum electrical power deliverable by at least one among the first battery B1 and the second battery B2, in particular by means of an electronic interrogation step of the battery. More in particular, the control unit 10 is configured to electronically find the first datum related to the maximum power deliverable by the first battery B1 and the second datum related to the maximum power deliverable by the second battery B2.

The control unit 10 is configured to electronically limit the electrical power supplied by the at least a first battery B1 and/or a second battery B2 only when the electrical power supplied to the at least one power user 101, 102 exceeds the value corresponding to said datum, and in particular to the first datum and/or to the second datum. In the event of low electrical power absorption, the control operated by the control unit 10 is "transparent".

In an embodiment, the control unit 10 determines and/or stores a maximum current value deliverable by each of the plurality of batteries B1-B4. In doing so, in the specific example of the present disclosure in which there are four batteries, the control unit 10 determines and/or stores four maximum current values deliverable: I_{1, max}, I_{2, max}, I_{3, max}, I_{4,} max [A],

It should be noted that for the purposes of the present disclosure, defining a maximum power value deliverable by a battery comprises determining or storing a current value; in fact, given the fact that a battery has a voltage other than 0V, and given the fact that P=V*I, defining a maximum power value comprises defining a maximum current value delivered by a battery.

I₁, I₂, I₃, I₄ [A] are defined as the electric currents actually delivered by the first, second, third and fourth battery.

In an embodiment, the control unit 10 executes a routine which includes setting all the batteries at a unique maximum current value Iₑₛₜ equal to the minimum of the four maximum current values deliverable: Iₑₛₜ = min {I_{1, max}, I_{2, max}, I_{3, max}, I_{4, max} }.

In doing so, as long as the demand of current of the at least one power user 101, 102 allows it, each of the four batteries delivers a current I₁, I₂, I₃, I₄ which varies with the demand of current of the at least one power user 101, 102; when the demand of current of the at least one power user 101, 102 is such as to determine the achievement of the unique maximum current value Iₑₛₜ, each of the four batteries B1-B4 will deliver the same current Iₑₛₜ. In this case the power user 101, 102 will be able to absorb a maximum current equal to 4lest.

In an alternative embodiment, the control unit 10 executes a routine which includes setting a maximum current value deliverable for each of the batteries B1-B4.

In doing so, as long as the demand of current of the at least one power user 101, 102 allows it, each of the four batteries delivery a current I1, I2, I3, I4 which varies with the demand of current of the at least one power user 101, 102; when the demand of current of the at least one power user 101, 102 progressively rises, the lowest of the four maximum current values deliverable I₁, ₘₐₓ, I₂, ₘₐₓ, I_{3, max}, I_{4, max} will be reached. The corresponding battery (supposing, the second battery B2), will begin to deliver a corresponding current value I2, max. The electric current absorbable by the at least one power user 101, 102 can still grow, until reaching a value such that all the batteries deliver the respective maximum current. The maximum current which the at least one power user can absorb is equal to the sum of the four currents I_{1, max}, I_{2, max}, I_{3, max}, I_{4, max}.

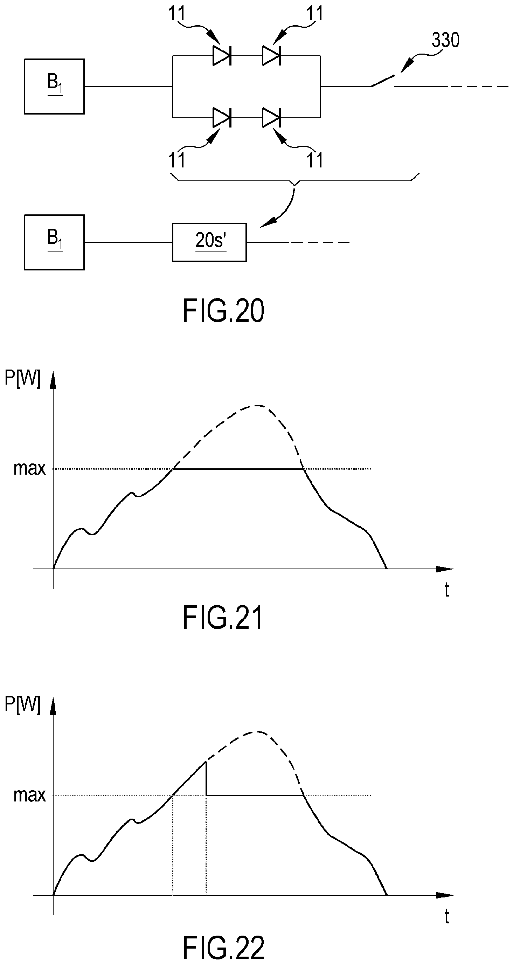

In an embodiment, the control performed by the control unit 10 is immediate. This means that if even only one of the batteries B1-B4 is instantly delivering a greater electrical power with respect to at least a first maximum power value, the aforesaid electrical power limitation is performed. This solution is schematically depicted in figure 21.

In an alternative embodiment, the control performed by the control unit 10 is such that cutting the maximum power deliverable is not immediate, but only intervenes following a predefined time interval.

A predefined time interval Δtₚₘₐₓ is defined for which the maximum power value can be exceeded by the batteries B1-B4, in particular by each of the batteries B1-B4.

When the electrical power P(t) instantly absorbed by the at least one power user 101, 102 exceeds the first maximum power value (if common for all batteries B1-B4) or the maximum power value deliverable for a given battery, the control unit 10 automatically starts to perform an electronic count, until the predefined time interval Δtₚₘₐₓ is reached.

Upon reaching the predefined time interval Δtₚₘₐₓ, if the electrical power absorbed by the at least one power user 101, 102 continues to be higher with respect to the first maximum power value (if common for all the batteries B1-B4) or the maximum power value deliverable for a given battery, the control unit 10 intervenes with said power limitation. This latter solution is schematically depicted in figure 22.

In particular, this means that if the electrical power absorbed by the at least one power user falls below the maximum power value deliverable (or the maximum power values deliverable, if different for each battery), the count performed by the control unit 10 is automatically terminated.

By virtue of this technical feature, it is possible to cope with sudden power demand peaks (for example, due to the inrush current of the electric motors) without causing power shortages to the power users, while at the same time ensuring the maintenance of correct control functionality.

Depending on the specific structure of the batteries, and more generally the power supply system of the tool or vehicle for gardening or agriculture, the limitation occurs by transmitting an appropriate power limitation signal Sₗᵢₘ from the control unit 10 to one or more of the batteries B1-B4 whose output electrical power must be limited.

In an alternative embodiment, the control unit 10 itself comprises a power limitation circuit which is intended to execute the functions described above. In such a case, there is no transmission of a power limitation signal Sₗᵢₘ from the control unit 10 to one or more of the batteries B1-B4; such a power limitation signal Sₗᵢₘ is a signal which remains inside the control unit 10, and is transmitted by the data processing unit itself to the power limitation circuit (or if necessary, to the limiting circuits).

The measurement of the instantaneous power absorbed by the at least one power user 101, 102, and in particular of the current absorbed by the at least one power user 101, 102, is carried out by an electronic sensor of known type (and therefore not described in detail). The electronic sensor can be external with respect to the control unit 10 or inside the latter. Clearly, where the electronic sensor is external, this sensor will transmit a control signal of the power instantly absorbed by the at least one power user 101, 102 to the control unit 10.

In a preferred and non-limiting embodiment, the control unit 10 is configured to force the activation of the fan for cooling the batteries, even independently of reaching or exceeding said temperature threshold t_{TH}.

More in particular, the control unit 10 is configured and specifically intended to transmit an activation signal to at least one fan for cooling the plurality of batteries B1-B4 when the electrical power P(t) instantly absorbed by the at least one power user 101, 102, reaches a predefined power value requiring an active cooling. In a non-limiting embodiment, the predefined power value requiring an active cooling is for example substantially equal to 2/3 of the first maximum power value and preferably substantially equal to said first maximum power value.

### Battery charging circuits.

Figure 8 schematically illustrates a charging circuit of a plurality of batteries, for the sake of simplicity of a first and a second battery B1, B2. As described above, the batteries are connected in parallel with respect to the power supply. A plurality of BPS (Bidirectional Power Switch) modules 40, one for each branch, are arranged in series to the respective battery. In an embodiment, each BPS module makes said switch 44.

Figure 9 schematically illustrates a power supply circuit of a user 101, 102, in which a plurality of batteries, for the sake of simplicity a first and a second battery B1, B2, powers said user. Also in this power supply configuration, due to the specific physical connection, the plurality of BPS modules 40 is arranged so that, for each power supply branch, there is a BPS module 40 connected in series to the respective battery.

Each BPS module 40 makes an active-type switch which can support a bidirectional current flow when in the closed configuration and a bidirectional current interruption when in the open configuration.

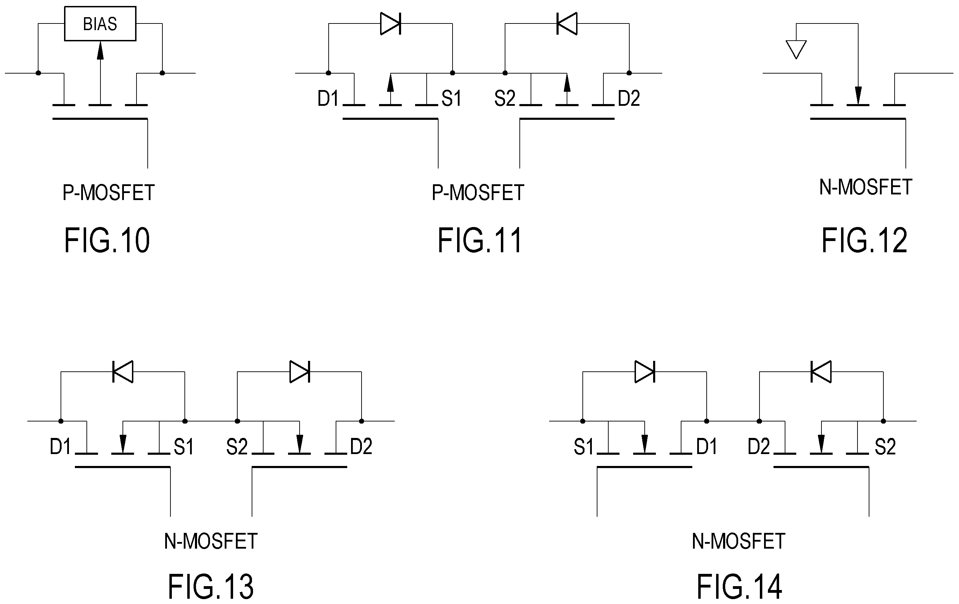

In a preferred but non-limiting embodiment, each BPS module 40 comprises at least one transistor, in particular an FET (field-effect transistor). Figures 10, 11, 12, 13, 14 illustrate possible circuit configurations of a BPS module 40 which allow to obtain:
- when the BPS module 40 is in an open configuration, an interruption of the bidirectional current flow, to and from the respective battery, regardless of the voltage value at the terminals of the BPS module 40; and
- when the BPS module 40 is in a closed configuration, a bidirectional current flow, to and from the respective battery, with voltage at the terminals of the BPS module 40 which is ideally zero. In particular, figure 10 illustrates a circuit configuration with a P-type MOSFET, in which there is a biasing module which allows a correct bias on the source or drain in accordance with the polarity of the voltage. Figure 11 illustrates a back-to-back type circuit configuration with two P-type MOSFETs.

Figure 12 illustrates a circuit configuration with an N-type MOSFET. Figure 13 illustrates a back-to-back type circuit configuration with two N-type MOSFETs with a common source configuration. Two diodes, one for each MOSFET, are positioned between the source and the drain, with anodes connected to the respective source, and with the two sources directly connected. A similar technical functionality can be obtained by employing a back-to-back type circuit configuration with two N-type MOSFETs connected in common drain configuration (figure 14).

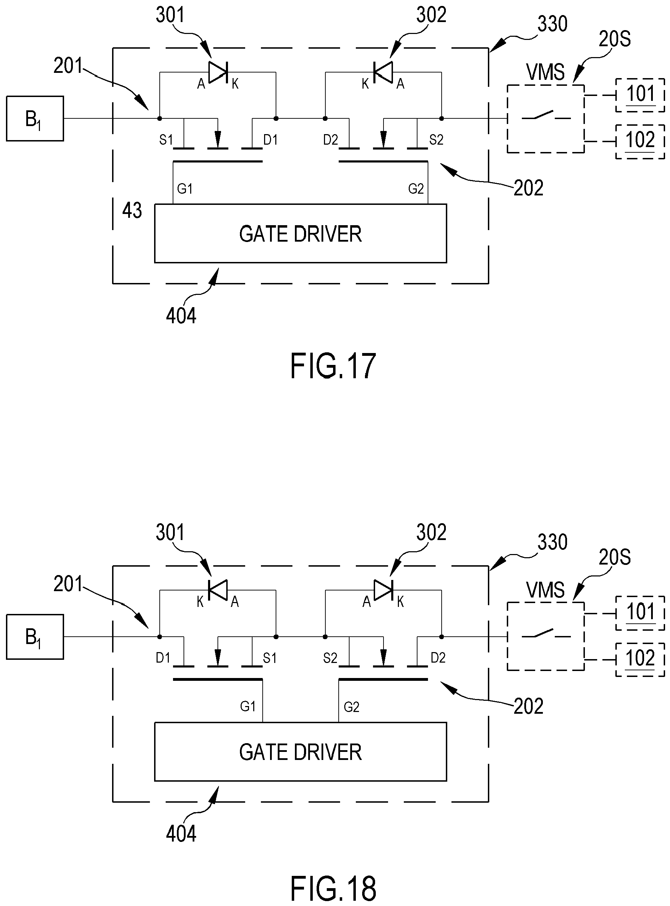

Figures 17 and 18 illustrate two particular configurations of a solid-state supply switch circuit 20s'. The supply switch circuit 20s' which makes a unidirectional power switch, i.e., a power switch capable of allowing the transit of an electric current in only one direction, which in particular is the direction to the at least one power user 101, 102.

As a switch, the supply switch circuit 20s' has:
- a closed configuration, which allows the passage of current from the batteries B1-B4 to the at least one power user, and
- an open configuration, which prevents the passage of current from the batteries B1-B4 to the at least one power user.

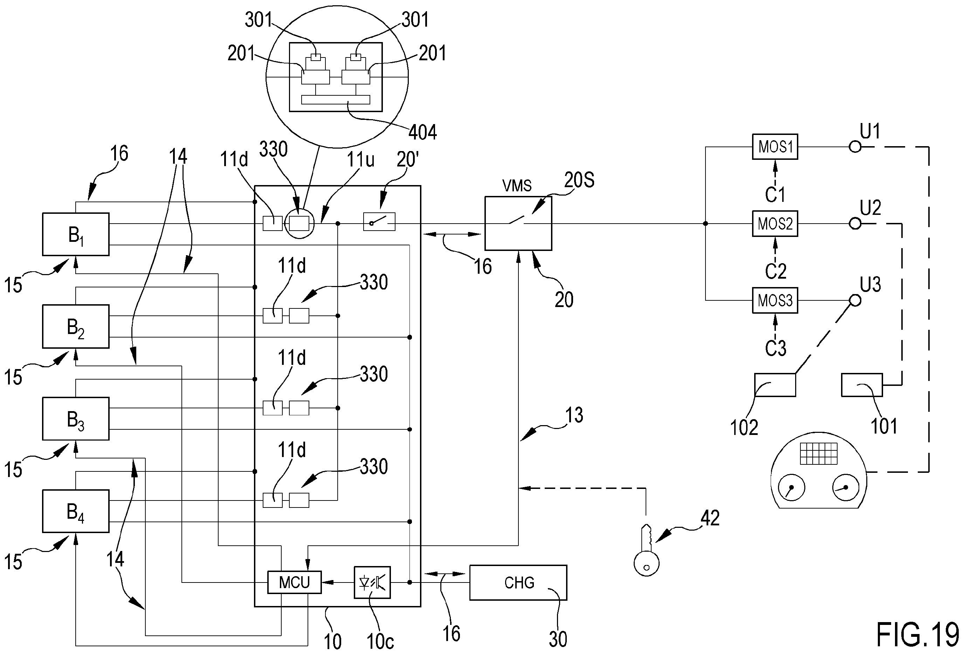

In a preferred but non-limiting embodiment, the supply switch circuit 20s' is arranged substantially at each of the batteries B1-B4. However, this configuration is not intended to be limiting; in fact, it is possible to have at least one further configuration in which the supply switch circuit 20s' is arranged outside the battery. Such a configuration is schematically depicted in figure 19. Figure 19 illustrates a principle diagram according to which a plurality of diodes 11 arranged on two branches in which, for each branch, there are two diodes 11 in series and in which the plurality of branches is arranged in series with a switch, the overall assembly formed by the plurality of diodes 11 and the switch, is made by the supply switch circuit 20s'.

The unidirectionality allowed to the current flow is such that, in principle, the supply switch circuit 20s' comprises a controllable switch in opening and closing and an ideal diode placed in series, to the controllable switch. For example, it can be considered that the ideal diode is placed upstream of the controllable switch, so as to have its anode directly connected to the respective battery.

The supply switch circuit 20s' is in particular made with a plurality of MOSFETs in back-to-back configuration with controlled piloting; figures 17 and 18 illustrate two non-limiting embodiments which employ N-MOSFETs in back-to-back configuration.

In detail in figure 17 a first embodiment is illustrated in which a first N-MOSFET and a second N-MOSFET are connected to each other in the following manner.

Proceeding from the battery to the at least one power user 101, 102, there is a first N-MOSFET 201 whose source terminal S1 is directly connected to the battery. The first N-MOSFET 201 has a drain terminal D1 which is connected to a drain terminal D2 of a second N-MOSFET 202 placed in series with the previous one.

Between the source terminal and the drain terminal of the first N-MOSFET 201 there is a first diode 301 whose anode is connected to the source terminal S1 of the first N-MOSFET 201 and whose cathode is connected to the drain terminal D1 of the first N-MOSFET 201 (and due to the direct connection between the drain terminal D1 of the first N-MOSFET 201 with the drain terminal of the second N-MOSFET 202, the cathode is also connected to the drain terminal D2 of the second N-MOSFET 202).

The second N-MOSFET 202 comprises a source terminal S2, and between the drain terminal D2 and the source terminal S2 of the second N-MOSFET 202 there is a second diode 302, the anode of which is connected to the source terminal S2 and the cathode of which is connected to the drain terminal D2 of the second N-MOSFET 202.

The assembly formed by the first diode 301 in parallel to the source and drain terminals S1, D1 of the first N-MOSFET makes the ideal diode. The assembly formed by the second diode 302 in parallel to the source and drain terminals S2, D2 of the second N-MOSFET makes the controlled switch.

The gate terminal G1 of the first N-MOSFET 201 and the gate terminal G2 of the second N-MOSFET 202 are directly connected to a respective terminal of a gate piloting circuit 404, the purpose of which is to bias the gate terminal G1 of the first N-MOSFET 201 and/or of the second N-MOSFET 202 so as to determine, upon the receipt of a predetermined control signal, the opening or the closing of the channel of the second N-MOSFET 202 so as to determine the simulation of an ideal open or closed switch, and so as to determine, upon receipt of the aforesaid predetermined control signal, the opening or the closing of the channel of the first N-MOSFET 201 so as to determine the behaviour thereof as an ideal diode.

In detail in figure 18 a second embodiment is illustrated in which a first N-MOSFET and a second N-MOSFET are connected to each other in the following manner.

Proceeding from the battery to the at least one power user 101, 102, there is a first N-MOSFET 201 whose drain terminal D1 is directly connected to the battery. The first N-MOSFET 201 has a source terminal S1 which is connected to a source terminal S2 of a second N-MOSFET 202 placed in series with the previous one.

Between the source terminal and the drain terminal of the first N-MOSFET 201 there is a first diode 301 whose anode is connected to the source terminal S1 of the first N-MOSFET 201 and whose cathode is connected to the drain terminal D1 of the first N-MOSFET 201. Due to the direct connection between the source terminal S1 of the first N-MOSFET 201 and the source terminal S2 of the second N-MOSFET 202, the anode is also connected to the source terminal S2 of the second N-MOSFET 202.

The second N-MOSFET 202 comprises a source terminal S2, and between the drain terminal D2 and the source terminal S2 of the second N-MOSFET 202 there is a second diode 302, the anode of which is connected to the source terminal S2 and the cathode of which is connected to the drain terminal D2 of the second N-MOSFET 202.

The assembly formed by the first diode 301 in parallel to the source and drain terminals S1, D1 of the first N-MOSFET makes the ideal diode. The assembly formed by the second diode 302 in parallel to the source and drain terminals S2, D2 of the second N-MOSFET makes the controlled switch.

The gate terminal G1 of the first N-MOSFET 201 and the gate terminal G2 of the second N-MOSFET 202 are directly connected to a respective terminal of a gate piloting circuit 404, the purpose of which is to bias the gate terminal G1 of the first N-MOSFET 201 and/or of the second N-MOSFET 202 so as to determine, upon the receipt of a predetermined control signal, the opening or the closing of the channel of the second N-MOSFET 202 so as to determine the simulation of an ideal open or closed switch, and so as to determine, upon receipt of the aforesaid predetermined control signal, the opening or the closing of the channel of the first N-MOSFET 201 so as to determine the behaviour thereof as an ideal diode.

In principle, the first N-MOSFET 201 and the second N-MOSFET 202 could be exchanged with each other, so that the second N-MOSFET 202 has the source terminal S2 directly connected to the battery, and so that the first N-MOSFET 201 is placed downstream (in the direction of the electrical power transmitted to the at least one power user 101, 102) with respect to the second N-MOSFET 202. However, the configuration illustrated in figures 17 and 18, in which the first N-MOSFET 201 is placed upstream of the second N-MOSFET 202 is the one which ensures greater operating efficiency.

It is also clear that although two embodiments in which a first N-MOSFET 201 and a second N-MOSFET 202 are present have been described in the present detailed description, in principle such N-MOSFETs can be replaced by any type of JFET, coupled with diodes, capable of obtaining the same technical functionality.

In a preferred, but non-limiting embodiment, the first N-MOSFET 201 and the second N-MOSFET 202, and the first and the second diode 301, 302, are integrated together in a single device or electronic board.

Figures 17 and 18 respectively illustrate a first and a second non-limiting embodiment in which the supply switch circuit 20s' is positioned upstream with respect to the control unit 10, resulting in particular interposed between the cells 43 of the battery and the control unit 10. In an alternative embodiment, such a supply switch circuit 20s' is positioned downstream with respect to the control unit 10.

It is noted that although in the appended figures the first and the second diode 301, 302 and the MOSFETs are depicted as separate components, in reality they are integrated in a single chip.

Figure 19 takes up the circuit diagram of figure 2, but illustrates a variant thereof in which the unidirectional power switches made by the previously described MOSFETs are present.

The advantages of using the supply switch circuit 20s' in the form disclosed herein are evident in the light of the foregoing description. It prevents the recirculation of current from a more charged battery to a less charged battery. The use of the second N-MOSFET 201 advantageously allows to disconnect the discharge of the single battery, allowing an extreme flexibility in the implementation of diagnostic logics and use of the batteries for the power supply of the at least one power user 101, 102. Furthermore, the supply switch circuit 20s' improves the energy efficiency with respect to the use of a traditional diode in series with a switch. Better energy efficiency means lower losses due to the Joule effect, therefore less heating of the electronics, and less voltage drop. Given a predefined capacity of one or more cells 43, and more generally of one or more batteries, the increase in energy efficiency given by the supply switch circuit 20s' advantageously allows a greater amount of electrical energy to be made available to the at least one power user 101, 102. Moreover, at the same power absorbed by the at least one power user 101, 102, the average autonomy time made possible by the power supplied by the plurality of batteries B1-B4 is increased.

The control unit 10 is also responsible for controlling the gate piloting circuit 404, and is therefore operatively connected with the latter.

In light of the above description, therefore, it is clear that all the functions previously described, and in particular and without limitation at least one of the functions of selecting the battery to be charged, to then power the at least one power user 101, 102 by means of a plurality of batteries, the function of limiting the power delivered, the function of managing the charging by means of an algorithm which prioritises the priority power user 102 with respect to the secondary power user 201, and the function which allows what is known as the "hot swap" of the batteries can be implemented in association with the presence of said supply switch circuit 20s'.

### Housing of the electronic control board of the batteries.

The devices composing the control unit 10 are at least partly interconnected to each other by means of a PCB serving as a support for such devices. The devices and the PCB form an electronic control board for the batteries of the lawnmower tractor.

The electronic board is housed inside a casing which is fixed inside the special compartment V3 of the lawnmower tractor 100 and which has at least one passage opening for the wiring which allows such an electronic board to be powered and electrically connected to the batteries.

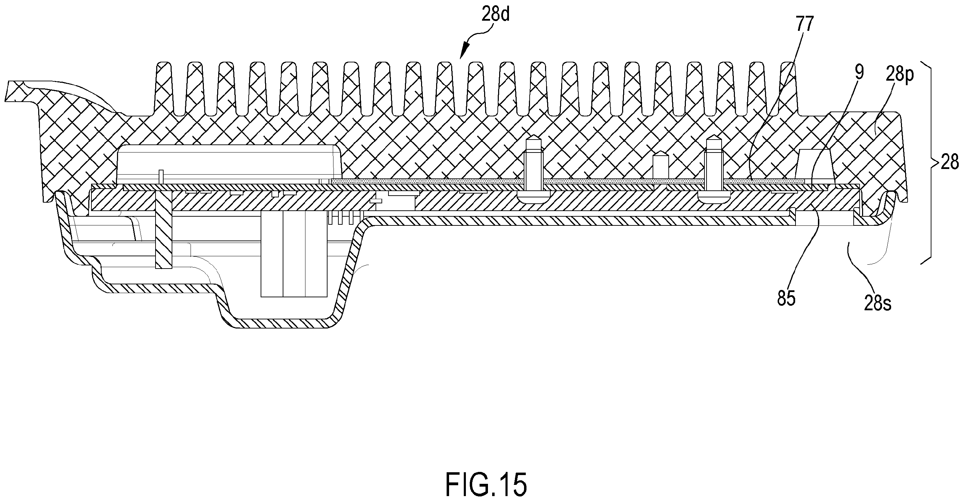

The housing of the electronic board according to the present invention (as depicted in the section of figure 15) allows an optimal dissipation of the heat generated by the devices of the control unit 10 (for example, and not limitedly, by the MOSFETs or by the diodes), thus preventing overheating phenomena of the electronic board.

The casing of the electronic board is at least partially made of electrically conductive material. In the example referred to in figure 15, the casing 28 housing the electronic board 9 comprises a first half-shell 28P in thermally conductive material (preferably in aluminium) and a second half-shell 28S in thermally insulating material (preferably in moulded plastic), the first half-shell 28P and the second half-shell 28S being connected to each other by means of screws which ensure the separability between the half-shells, in particular so as to perform technical assistance operations.

In an embodiment, a finned thermal heatsink 28D is integrated (or more in general operatively coupled) to the first half-shell 28P. The finned thermal heatsink 28D illustrated in figure 15 is integral with the first half-shell 28P, but could alternatively be screwed onto the first half-shell. The first half-shell 28P, and in particular the finned thermal heatsink 28D, is configured and specifically intended to disperse the heat developed by the electronic board 9.

Advantageously, the heat generated by the electronic board 9 is transferred by conduction to the first half-shell 28P. To this end, the electronic board 9 is screwed directly to the first half-shell 28P, so as to minimise the distance between the electronic board 9 and the first half-shell 28P. Furthermore, in the gap which in any case exists between the electronic board 9 and the first half-shell 28P (also for electrical safety reasons) a layer 77 in conductive material is arranged. For example, such a layer 77 can be obtained by a thermally conductive silicone sheet (having a conductivity greater than 2 W/mK). Alternatively to the sheet material, it can be envisaged that the thermally conductive material is affixed to the electronic board 9 in the form of film, paint, glue or foam.

The heat is thus dissipated by the first half-shell 28P by convection. To this end, the first half-shell 28P has a geometry aimed at increasing the surface extension thereof. In the example of figure 15, a plurality of cooling fins 8 protrude from the outer surface of the first half-shell 28P, the fins 8 being advantageously obtained in a single piece with the first half-shell 28P.

Preferably, but not limitedly, in the gap between the electronic board 9 and the second half-shell 28S, a material is housed which is intended to isolate the electronic board 9 from moisture or sprays of water. In an embodiment, said material comprises a silicone layer 85. The presence of a layer intended to insulate from moisture or sprays is particularly advantageous in view of the traditional environment in which a tool or vehicle for agriculture and/or gardening can be found operating.

In the light of the above, it can be seen that the heat generated by the devices forming the control unit 10 is efficiently dissipated, through a path which conducts such heat by transmission from the electronic board 8, through the layer 77 in conductive material, to the outer surface of the first half-shell 28P, in particular to the fins 8, where it is finally removed by convection.

It should be noted that the configuration of the casing 28 described herein has in itself inventive contents, independent (albeit synergistic) with respect to the inventive contents related to the configuration of the control unit 10.

### Identification of the batteries

In an embodiment, the control unit 10 is configured to identify the batteries B1-B4 when installed on-board the lawnmower tractor 100. In particular, the control unit 10 is configured to uniquely identify each of the batteries B1-B4, so that it is electronically possible to distinguish the batteries from each other.

If the control unit 10 electronically identifies that one or more of the batteries of the plurality of batteries B1-B4 installed on board the lawnmower tractor 100 is discharged or malfunctioning, for example because it does not hold the supplied charge or has an abnormal overheating, the control unit 10 is configured to specifically store which battery among the plurality of said batteries B1-B4 is the one which is discharged or malfunctioning. By virtue of this technical feature, it is possible to electronically identify which battery needs to be removed or replaced or charged, and therefore which are the remaining batteries which can effectively contribute to supplying the power to the at least one power user 101, 102.

In a preferred, but non-limiting embodiment, the control unit 10 can be provided with a wireless communication interface. In such a case, the control unit can be configured to transmit, as operation control data of the lawnmower tractor 100 and to a remote electronic device, an identification datum of which, among the batteries installed on board the lawnmower tractor 100, is the one actually discharged and/or malfunctioning. A non-limiting example of such a datum can be: "battery B1 discharged". It should be noted that such an identification datum can in particular comprise not only the identification of the battery but also an associated residual charge value, for example qualitative (e.g., on a multi-notch graphic scale) or quantitative (e.g., 34%, or 1500 mAh) and/or a residual voltage value (e.g., 5V). The transmission can occur upon the request of the remote electronic device or automatically based on one or more preset parameters on the control unit 10, in particular according to previously described threshold voltage values.

### Brief summary of the advantages.

The advantages of the method and the control unit described above are clear; they allow to obtain a charge and a discharge of batteries for powering users in a particularly efficient manner, and in a safe manner. They allow a separate charging of a plurality of batteries and a substantially common discharging thereof without the need for circuit reconfigurations by an operator. The batteries which fail during the operating life are automatically excluded from the circuit, and this optimises the safety of operation of the tool or vehicle on which the batteries are installed.

The method and the control unit 10 described herein allow to efficiently and safely manage the use of batteries of different type, and contribute to reducing the risk of power overload if batteries of different type and/or with different electrical power delivery capacities are used.

A tool or vehicle controlled by the method or control unit 10 advantageously described herein has greater safety of use in the event that the residual charge and/or the electrical power deliverable by the batteries is limited.

In the latter case, a particular embodiment of the method and of the control unit 10 allow a rapid and immediate restoration or lifting of the residual charge and/or of the electrical power available to the at least one power user 101, 102, by virtue of the presence of the technical "hot swap" feature.

The tool or vehicle 100 can itself become a power supply useful for charging batteries which can also be used for further applications, after removal from the tool or vehicle 100 itself. Therefore, the tool or vehicle 100, in addition to its own peculiar functions (e.g., cutting turfgrasses) can be employed, in a green maintenance system, as a charging centre for batteries for different tools and vehicles, e.g., brush cutters and lawnmower robots.

The method and control unit described above are particularly effective in use with lithium batteries, in particular lithium-ion batteries.

The present invention also allows to extend the useful life of the batteries, as well as to increase the thermal efficiency thereof.

Furthermore, the present invention provides a vehicle for gardening with an arrangement of the batteries which is optimal both for the purpose of allowing convenient and ergonomic operations of insertion and/or extraction and/or replacement of the batteries, and for the purpose of obtaining a remarkable stability of the vehicle.

The invention is not limited to the embodiments depicted in the appended drawings; for this reason, when present, reference numerals or signs indicated in the claims are intended to be provided for the sole purpose of increasing the intelligibility thereof; such reference numerals or signs are not to be understood in a limiting manner.

It is finally evident that additions, modifications or variations can be applied to the present invention, which are obvious to a person skilled in the art, without departing from the scope of protection provided by the appended claims.

## Claims

1. Management method of a tool or vehicle (100), in particular of a tool or vehicle for gardening or agriculture, even more in particular of a lawnmower tractor,
wherein said tool or vehicle (100) comprises at least one power user (101, 102) and a power supply circuit configured to electrically power said at least one power user (101, 102),
wherein at least one among a first battery (B1) and/or a second battery (B2) of a plurality of batteries (B1-B4) is configured to be installed removably on board said tool or vehicle (100), said at least one among said first battery (B1) and said second battery (B2), when installed on board said tool or vehicle (100), contributing to electrically power said at least one power user (101, 102) by means of said power supply circuit,
wherein the method comprises a step of configuring a control unit (10) in use controlling at least one among an activation of an electrical power supply, a deactivation of the electrical power supply and an adjustment of the electrical power supplied, by at least part of the plurality of batteries (B1-B4), in particular by at least one among the first battery (B1) and/or the second battery (B2), to said at least one power user (101, 102),
wherein, in said configuration step, the control unit (10) allows the connection or disconnection of at least one battery of the plurality of batteries (B1-B4), in particular of one among the first battery (B1) and the second battery (B2), from the power supply circuit, without interruption of the electrical power supplied to said at least one power user (101, 102),
optionally wherein said tool or vehicle (100) further comprises at least one compartment (V1, V2) for housing said plurality of batteries (B1-B4), in particular said first battery (B1) and/or said second battery (B2), and wherein said method further comprises a step of introducing said at least one battery of the plurality of batteries (B1-B4) into said at least one compartment (V1, V2) or a step of extracting said at least one battery of the plurality of batteries (B1-B4) from said at least one compartment (V1, V2) so as to operate a connection of said at least one battery of the plurality of batteries (B1-B4) to said tool or vehicle (100) or a disconnection of said at least one battery of the plurality of batteries (B1-B4) from said tool or vehicle (100).

2. Method according to claim 1, wherein, following the disconnection of said at least one battery of the plurality of batteries (B1-B4) from said tool or vehicle (100), a step of connecting said at least one battery of the plurality of batteries (B1-B4) to a power supply and/or electrical energy storage device or to a further tool or vehicle for gardening or agriculture is executed and/or
wherein prior to the connection of said at least one battery of the plurality of batteries (B1-B4) to said tool or vehicle (100) a step of disconnecting said at least one battery of the plurality of batteries (B1-B4) from a power supply and/or electrical energy storage device or from a further tool or vehicle for gardening or agriculture is executed and/or
wherein, following the connection or disconnection of said at least one battery of the plurality of batteries (B1-B4), in particular a connection or disconnection of one among said first battery (B1) and said second battery (B2), a step of filtering and/or limiting voltage and/or current peaks and/or drops is included upstream of said at least one power user (101, 102), in particular upstream of said power supply circuit of the power user (101, 102).

3. Method according to claim 1 or claim 2, wherein the at least one power user (101, 102) comprises a primary power user (102) and a secondary power user (101), and wherein, in said configuration step, the control unit (10) allows the connection or disconnection of at least one battery of the plurality of batteries (B1-B4), in particular of one among the first battery (B1) and the second battery (B2), from the power supply circuit, without interruption of the electrical power supply provided to said primary power user (102) and determining a powering down or an electrical power supply of said secondary power user (101) in accordance with at least one value among an electrical power, charge, voltage or current, made available by the at least one battery connected to said power supply circuit,
wherein the method comprises in particular a step of enabling an actuation of the at least one primary power user (102) among the plurality of power users (101, 102), or of an actuation of the primary power user (102) and the secondary power user (101) among the plurality of power users (101, 102), as a function of a number n of batteries (B1-B4).

4. Method according to claim 3, wherein, following the disconnection of said at least one battery from the plurality of batteries (B1-B4), in particular the disconnection of one among said first battery (B1) and said second battery (B2), the control unit (10) automatically performs an electronic verification step of whether at least one among an electrical power, charge, voltage or current, made available by the at least one battery connected to said power supply circuit is sufficient to power the at least one power user (101, 102), preferably said primary power user (102) and said secondary power user (101), and wherein, following said electronic verification step and according to at least one value among an electrical power, charge, voltage or current, made available by the at least one battery residually connected to said power supply circuit, the control unit (10) executes at least one among the following actions:
- an electronic limitation of a power deliverable to said at least one power user (101, 102) and/or of a power absorbable by said at least one power user (101, 102), preferably an electronic limitation of a power deliverable to said primary power user (102) and/or to said secondary power user (101) and/or of a power absorbable by said primary power user (102) and/or by said secondary power user (101),
- a powering down of said secondary power user (101), maintaining said primary power user (102) in a power supply condition;
- a powering down of said primary power user (102) and of said secondary power user (101),
optionally allowing an electrical power supply of at least itself and of electrical control circuits of said primary power user (102) and/or of said secondary power user (101).

5. Control unit (10) for a tool or vehicle (100) for gardening or agriculture, in particular for a lawnmower tractor, configured to be operatively connected with:
- at least one power user (101, 102) of said tool or vehicle (100), the at least one power user (101, 102) being configured to be electrically powered,
- a plurality of batteries (B1-B4), configured to be removably installed on board said tool or vehicle (100) and to be intended to electrically power said at least one power user (101, 102) by means of a power supply circuit,
wherein the control unit (10) is configured to allow the connection or disconnection of at least one battery of the plurality of batteries (B1-B4), in particular of at least one among a first battery (B1) and a second battery (B2) of said plurality of batteries (B1-B4), from the power supply circuit, without interruption of a power supply provided to said at least one power user (101, 102).

6. Control unit (10) according to claim 5, comprising a step of filtering and/or limiting voltage and/or current peaks and/or drops, executing, in use, a filtering and/or a limiting of voltage and/or current peaks and/or drops, upstream of said at least one power user (101, 102), in particular upstream of said power supply circuit of the power user (101, 102).

7. Control unit (10) according to claims 5 or claim 6, wherein said control unit (10) is specifically intended to cause a selection and/or a limitation, in particular an electronic selection and/or limitation, of a maximum electrical power deliverable by each battery of the plurality of batteries (B1-B4) and wherein said control unit (10) is configured to transmit, in particular selectively and/or independently for each battery of the plurality of batteries (B1-B4), a power management signal to a switch, in particular a bidirectional power switch, of at least one battery selected among the batteries of said plurality of batteries (B1-B4).

8. Control unit (10) according to one or more of claims 5 to 7, the at least one power user (101, 102) comprising a primary power user (102) and a secondary power user (101), wherein said control unit (10) is configured to enable an actuation of the primary power user (102) or an actuation of the primary power user (102) and the secondary power user (101), as a function of the number n of batteries (B1-B4),
optionally wherein the control unit (10) is configured to allow the connection or disconnection of at least one battery of the plurality of batteries (B1-B4), in particular of one among the first battery (B1) and the second battery (B2), from the power supply circuit, without interruption of an electrical power supply provided to said at least one primary power user (102) and determining a powering down or an electrical power supply of said secondary power user (101) in accordance with at least one value among an electrical power, charge, voltage or current, made available by the at least one battery connected to said power supply circuit and/or,
optionally wherein, in use, following the disconnection of said at least one battery of the plurality of batteries (B1-B4), in particular the disconnection of one among said first battery (B1) and said second battery (B2), the control unit (10) is configured to perform an automated electronic verification of whether at least one among an electrical power, charge, voltage or current, made available by the at least one battery connected to said power supply circuit is sufficient to power the at least one power user (101, 102), preferably said primary power user (102) and said secondary power user (101), and is configured to perform, following said electronic verification and in accordance with at least one value among an electrical power, charge, voltage or current value, made available by the at least one battery residually connected to said power supply circuit, at least one among:
- an electronic limitation of a power deliverable to said at least one power user (101, 102) and/or of a power absorbable by said at least one power user (101, 102), preferably an electronic limitation of a power deliverable to said primary power user (102) and/or to said secondary power user (101) and/or of a power absorbable by said primary power user (102) and/or by said secondary power user (101);
- a powering down of said secondary power user (101), maintaining said primary power user (102) in a power supply condition;
- a powering down of said primary power user (102) and of said secondary power user (101),
optionally allowing an electrical power supply of at least itself and of electrical control circuits of said primary power user (102) and/or of said secondary power user (101).

9. Lawnmower tractor comprising:
- at least one power user (101, 102) configured to be electrically powered,
- a power supply circuit for said at least one power user (101, 102),
- a driving seat (103),
- at least one compartment (V1, V2) for housing a plurality of batteries (B1-B4), in particular for housing at least a first battery (B1) and a second battery (B2), said plurality of batteries (B1-B4) being configured to power said at least one power user (101, 102) by means of said power supply circuit,
- a control unit (10) according to one or more of claims 5 to 8.

10. Lawnmower tractor according to claim 9, wherein said control unit (10) is configured to allow the connection or disconnection of the first battery (B1) or of the second battery (B2), from the power supply circuit, without interruption of an electrical power supply provided to said at least one power user (101, 102), following an introduction or an extraction of the first battery (B1) or of the second battery (B2) from a respective compartment (V1, V2) positioned on said tool or vehicle (100).

11. Lawnmower tractor according to claim 9 or according to claim 10, wherein said at least one compartment (V1, V2) is associated with guide means suitable for defining defined trajectories for introducing and/or extracting the batteries (B1-B4) into said at least one compartment (V1, V2) and/or wherein said at least one compartment (V1, V2) is associated with ventilation means suitable for cooling the batteries (B1-B4) housed in said at least one compartment (V1, V2).

12. Lawnmower tractor according to one or more of claims 9 to 11, wherein said at least one compartment (V1, V2) for housing a plurality of batteries (B1-B4), comprises a first compartment (V1) and a second compartment (V2), said first compartment (V1) and second compartment (V2) being substantially equally extended and being positioned symmetrically with respect to a plane of symmetry of the lawnmower tractor,
optionally wherein at least part of the extension of said first compartment (V1) and at least part of the extension of said second compartment (V2) are positioned in respective portions of said lawnmower tractor arranged next to the portion of said lawnmower tractor at which said driving seat (103) is positioned.

13. Lawnmower tractor according to claim 12, said first compartment (V1) extending from a first access section extending along a substantially vertical plane at a first side of said lawnmower tractor and said second compartment (V2) extending from a second access section extending along a substantially vertical plane at a second side of said lawnmower tractor opposite said first side,
wherein said lawnmower tractor further comprises a first door (S1) and a second door (S2) applied to said first access section and said second access section, respectively, so as to allow a selective closing of said first compartment (V1) and said second compartment (V2), respectively.

14. Lawnmower tractor according to one or more of claims 9 to 13, further comprising a containment casing (28) of said control unit (10) and/or of a power supply circuit or of specific electronic components belonging to said control unit (10) and/or to said power supply circuit,
optionally wherein said casing (28) comprises a first half-shell (28P) in thermally conductive material, for example in aluminium, and a second half-shell (28S) in thermally insulating material, for example in moulded plastic, wherein in particular a plurality of cooling fins (8) are obtained in a single piece with said first half-shell (28P).

15. Lawnmower tractor according to claim 14, wherein said lawnmower tractor further comprises at least one additional compartment for housing said casing (28), said additional compartment being in particular distinct and/or separate with respect to said at least one compartment (V1, V2) for housing a plurality of batteries (B1-B4a), in particular with respect to said first compartment (V1) and second compartment (V2),
optionally wherein said additional compartment is arranged below said driving seat (103).
